# EUROPÄISCHE PATENTSCHRIFT

(11) **EP 4 162 407 B1**
(45) Veröffentlichungstag und Bekanntmachung des Hinweises auf die Patenterteilung: **13.09.2023**
(21) Anmeldenummer: 22727245.7
(22) Anmeldetag: 27.05.2022
(51) Int. Cl.: G06N 3/067, H04B 10/516, H04B 10/63

(54) **OPTISCHE ANORDNUNG ZUR EMULATION EINES NEURONALEN NETZES**
OPTICAL ARRAY FOR EMULATING A NEURAL NETWORK
RÉSEAU OPTIQUE POUR ÉMULER UN RÉSEAU NEURONAL

(30) Priorität: 28.05.2021 AT 504292021
(43) Veröffentlichungstag der Anmeldung: 12.04.2023
(73) Patentinhaber: AIT Austrian Institute of Technology GmbH, 1210 Wien (AT)
(72) Erfinder: SCHRENK, Bernhard, 2122 Ulrichskirchen (AT)
(74) Vertreter: Wildhack & Jellinek
(86) Internationale Anmeldenummer: PCT/AT2022/060181
(87) Internationale Veröffentlichungsnummer: WO 2022/246489

(56) Entgegenhaltungen:
- MIYAZAKI Y ET AL: "Optical signal processing using waveguide type acousto-optic switch", 19881002; 19881002 - 19881005, 2. Oktober 1988 (1988-10-02), Seiten 447-450, XP010075488,

## Beschreibung

Die Erfindung betrifft eine optische Anordnung zur Datenverarbeitung, insbesondere eine optische Realisierung eines neuronalen Netzwerks sowie ein Verfahren zur Verarbeitung von optischen Datensignalen.

Aus dem Stand der Technik sind unterschiedliche Implementierungen von neuronalen Netzen bekannt.

Aus Y. Miyazaki, N. Goto and Y. Kanayama, "Optical signal processing using waveguide type acousto-optic switch," IEEE 1988 Ultrasonics Symposium Proceedings., Chicago, IL, USA, 1988, pp. 447-450 vol.1, doi: 10.1109/ULTSYM.1988.49416, ist eine optische Anordnung zur Emulation eines neuronalen Netzes bekannt, bei der eine Gewichtung von Signalen mittels akusto-optischer Schalter erfolgt, die den optischem Empfängern vorgeschaltet sind, sodass die optischen Empfänger das Ergebnis der Gewichtung empfangen.

Soll die Funktionalität eines neuronalen Netzwerkes auf Signale angewendet werden, die optisch vorliegen, d.h. z.B. in Form von Lichtsignalen, die in Lichtwellenleitern geführt werden, bestehen zahlreiche Probleme, da die in neuronalen Netzen notwendigen Operationen in optischen Bauelementen nicht oder nur mit sehr großem Aufwand durchgeführt werden können bzw. die hierfür erforderlichen Komponenten nicht oder nur mit sehr großem Aufwand hergestellt werden können.

Daher stellt sich die Erfindung die Aufgabe, eine einfach zu realisierende Anordnung zur Datenverarbeitung zu schaffen, die die Möglichkeiten eines neuronalen Netzwerks bietet und die dazu in der Lage ist, die durch das neuronale Netzwerk implementierten Operationen auf optische Signale anzuwenden.

Die Erfindung löst diese Aufgabe mit den Merkmalen des Patentanspruchs 1. Dabei sieht die Erfindung eine Vorrichtung zur Emulation eines neuronalen Netzes vor,
- wobei durch die Struktur des zu emulierenden neuronalen Netzwerks eine Verschaltung von zu emulierenden Neuronen vorgegeben ist, die ihrerseits eine Anzahl zu übertragenden Signalen vorgibt, die den Neuronen zugeführt und/oder von den Neuronen erzeugt sind,
- wobei jedes dieser Signale jeweils zumindest einem Kanal zugeordnet ist, der durch die Auswahl zumindest eines vorgegebenen optischen Frequenzkanals und zumindest eines zeitlich innerhalb eines Frame liegenden und gegenüber diesem definierten Slots gekennzeichnet ist,
wobei die optische Anordnung umfasst:
- zumindest einen optischen Eingang
- zumindest einen optischen Ausgang
- einen, insbesondere passiven, optischen Hub, der als Sternkoppler ausgeführt ist, wobei der Eingang und Ausgang über einen optischen Wellenleiter an den Hub angeschlossen sind, und
- ein elektrooptischer Schaltkreis, umfassend
   - eine Anzahl von optischen Empfängern, die optisch an den Hub gekoppelt sind,
   - eine Anzahl von optischen Emittern, die optisch an den Hub gekoppelt sind, und
   - eine Anzahl von Neuronen-Schaltkreisen, die zumindest einem optischen Empfänger nachgeschaltet sind und an deren Ausgang einen optischer Emitter umfassen, wobei die Neuronen-Schaltkreise dazu ausgebildet sind, die Funktion jeweils eines Neurons aus dem neuronalen Netzwerk zu erfüllen, und wobei die Neuronen-Schaltkreise jeweils über einen Takteingang verfügen, der jeweils den Beginn eines Frames und/oder Slots indiziert,
- wobei der elektrooptische Schaltkreis dazu ausgebildet ist, in jeweils periodisch wiederkehrenden Frames
   - den optischen Empfänger oder die optischen Empfänger, die einem Neuronen-Schaltkreis vorgeschaltet sind, entsprechend den den Eingangssignalen des zu emulierenden Neurons zugeordneten Kanälen jeweils während des durch den Kanal vorgegebenen Slots auf den durch den Kanal vorgegebenen Frequenzkanal einzustellen, sodass der jeweilige optische Empfänger während dieses Slots über den Frequenzkanal dasjenige übermittelte Signal empfängt, das durch das zu emulierende Neuronale Netzwerk vorgegeben ist,
   - an die den einzelnen Neuronen-Schaltkreisen vorgeschalteten optischen Empfänger eine zeitlich variierende periodische Gewichtsfunktion zuzuführen, mit der das betreffende Signal entsprechend der Vorgabe des neuronalen Netzes zu gewichten ist und/oder gewichtet wird, wobei
   - die Periodizität der Gewichtsfunktion der Dauer eines Frames entspricht und wobei der Wert der periodischen Gewichtsfunktion während der Slots demjenigen Gewichtswert entspricht, mit dem das mit dem Neuronen-Schaltkreis emulierte Neuron das bei ihm im betreffenden Slot einlangende Signal gewichtet,
- wobei für jeden der Neuronen-Schaltkreise jeweils eine Ausgangsschaltung umfassend folgende Einheiten vorgesehen ist:
   - ein Integrator dem der elektrische Ausgang des optischen Empfängers zugeführt ist und der dazu ausgebildet ist, das bei ihm einlangende gewichtete Signal während eines Frame zu integrieren und an seinem Ausgang ein diesbezügliches Integralsignal abzugeben,
   - eine Schwellenwertschaltung, die prüft, ob das so ermittelte Integralsignal einen vorgegebenen Schwellenwert übersteigt und wenn dies der Fall ist, ein Aktivierungssignal erstellt,
   - eine Verzögerungseinheit, bei Vorliegen eines von der Schwellenwertschaltung erstellten Aktivierungssignals während eines, insbesondere des unmittelbar, nachfolgenden Frame an danachgeschalteten optischen Emitter zur Abgabe eines Signals veranlasst, und zwar während eines Slots und mit einer Frequenz, der bzw die dem betreffenden Signal des neuronalen Netzwerks zugewiesen ist.

Mit einer solchen erfindungsgemäßen Vorrichtung ist es möglich, optische Signale mittels einer Schaltung zu behandeln, die die Funktion eines neuronalen Netzwerks emuliert.

Eine bevorzugte Ausführungsform der Erfindung sieht vor, dass
- die elektrooptischen Empfänger jeweils einen Empfängerlaser und einen Elektroabsorptionsmodulator aufweisen,
- sowohl das beim optischen Eingang des Empfängers einfallende Laserlicht wie auch das Licht des Empfängerlasers auf den Elektroabsorptionsmodulator gerichtet sind,
- am Ausgang des Elektroabsorptionsmodulators ein Strom fließt, der proportional und/oder monoton steigend zur Intensität des am Eingang des Empfängers einlangenden Laserlichts ist, und der dem Integrator zugeführten gewichteten Signal entspricht,
- der elektrooptische Schaltkreis dazu ausgebildet ist, zur Festlegung der Gewichtung eines optischen Signals im Rahmen der elektrooptischen Umwandlung in einem Empfänger
   - die Frequenz des Empfängerlasers innerhalb desjenigen Frequenzbands einzustellen, das dem vom jeweiligen Empfänger während des jeweiligen Slots zu empfangenden Signal zugewiesen ist, sodass sich ein homodyner Empfang einstellt, und
   - die Frequenz innerhalb des Frequenzbands so festzulegen, dass sich eine Gewichtung, insbesondere auch eine Änderung des Vorzeichens, vorzugsweise durch Auswahl einer Frequenz am oberen Ende des Frequenzbands, des am Eingang des Empfängers einlangenden Signals ergibt.. Diese Weiterbildung der Erfindung ermöglicht auch die negative Gewichtung von Signalen bei der Erstellung eines Antwortsignals.

Eine weitere bevorzugte Ausführungsform der Erfindung sieht vor, der elektrooptische Schaltkreis dazu ausgebildet ist, eine zusätzliche Gewichtung mit einem positiven Gewichtungsfaktor durch Vorgabe einer Vorspannung am Eingang des Elektroabsorptionsmodulators vorzunehmen. Hierdurch kann eine zusätzliche leicht einstellbare Gewichtung der Eingangssignale im Rahmen der Erstellung eines Antwortsignals erzielt werden.

Um Störungen, die bei der Nutzung großer Anzahlen von Frequenzen auftreten, wirksam unterdrücken zu können, kann vorgesehen sein, dass ein Empfänger, insbesondere jeder Empfänger, zur Unterdrückung von spektralen Nachbarkanälen und Rauschen des lokalen Laserlichts folgendes umfasst:
- einen Strahlteiler, der das bei ihm einlangende Laserlicht in zwei Lichtanteile mit derselben Signalenergie aufteilt,
- zwei Elektroabsorptionsmodulatoren, denen jeweils einer der Lichtanteile über jeweils einen optischen Wellenleiter zugeführt sind,
- einen lokalen Empfängerlaser,
- einen zwischen dem lokalen Empfängerlaser und einem der Elektroabsorptionsmodulatoren angeordneten Phasenschieber, der die Phase des bei diesem Elektroabsorptionsmodulator einlangenden Laserlichts des lokalen Empfängerlasers so einstellt, dass die durch den homodynen Empfang ermittelten elektrischen Stromsignale an den Ausgängen beiden Elektroabsorptionsmodulatoren um 180° zueinander phasenverschoben sind, und
- einen Differenzbilder, insbesondere einen differentiellen Transimpedanzverstärker, dem die beiden elektrischen Stromsignale zugeführt sind, und an dessen Ausgang das gewichtete Signal vorliegt.

Eine weitere Verbesserung der Rekonfigurierbarkeit sowie die Bereitstellung eines generischen optisch-neuronalen Standardbauelements kann erreicht werden, indem folgende Merkmale vorgesehen sind:
- eine Anzahl von optoelektronischen Wandlereinheiten, die jeweils einen lokalen Laser und einen Elektroabsorptionsmodulator aufweisen, wobei der elektrooptische Schaltkreis dazu ausgebildet ist, diese einzeln durch Festlegung des lokalen Laserstroms, Vorgabe einer Vorspannung am Elektroabsorptionsmodulator und/oder Messung des vom Elektroabsorptionsmodulator abgegebenen Stroms je nach Vorgabe des zu emulierenden neuronalen Netzwerks als optische Empfangseinheit oder optischen Emitter zu betreiben,
- eine Anzahl von Neuronen-Schaltkreisen jeweils umfassend einen Integrator, einen Schwellenwertbilder und eine Verzögerungseinheit, sowie jeweils einen elektrischen Eingang und einen elektrischen Ausgang,
- eine vom elektrooptischen Schaltkreis gesteuerte Schaltmatrix, die dazu ausgebildet ist, die einzelnen optischen Empfangseinheiten und optischen Emitter mit den Ein- und Ausgängen der Neuronen-Schaltkreise elektrisch zu verbinden, die Funktion des zu emulierenden neuronalen Netzwerks nachzubilden.

Unter dem Begriff "eine Anzahl von" wird vorliegend jeweils entweder "zumindest ein(er)" bzw. "ein(e) einzige(r)" verstanden, oder "mehrere". Bevorzugt soll der Begriff "eine Anzahl von" als "mehrere" bzw. "mehr als eine" verstanden werden.

### Figuren

Mehrere nicht einschränkend zu verstehende Ausführungsbeispiele der Erfindung sowie Varianten hiervon sind anhand der folgenden Zeichnungsfiguren näher dargestellt.

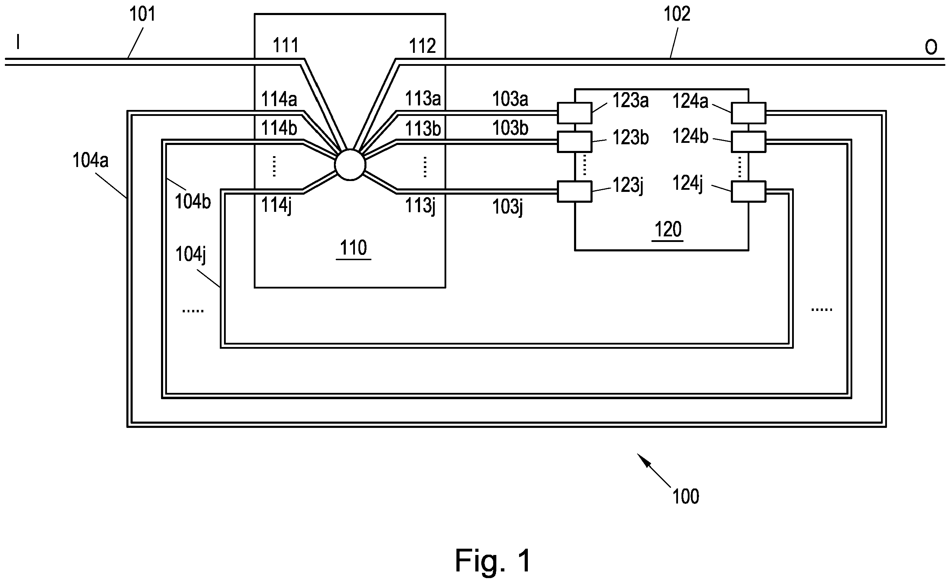

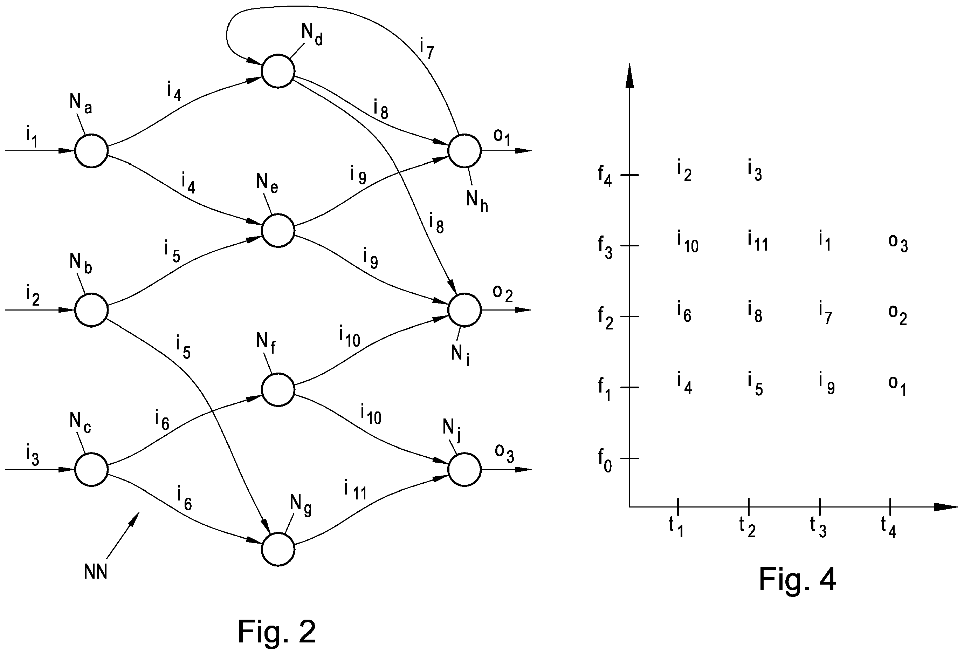

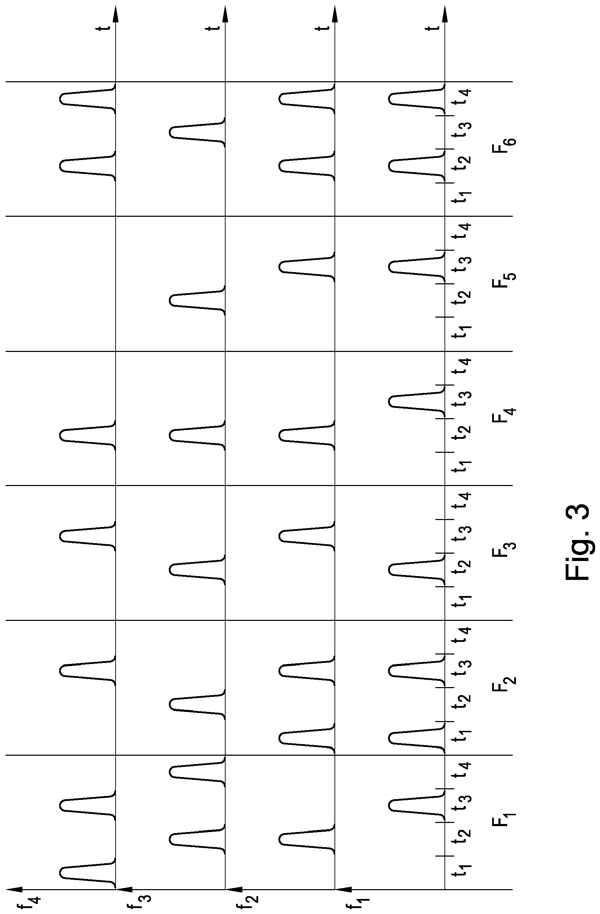

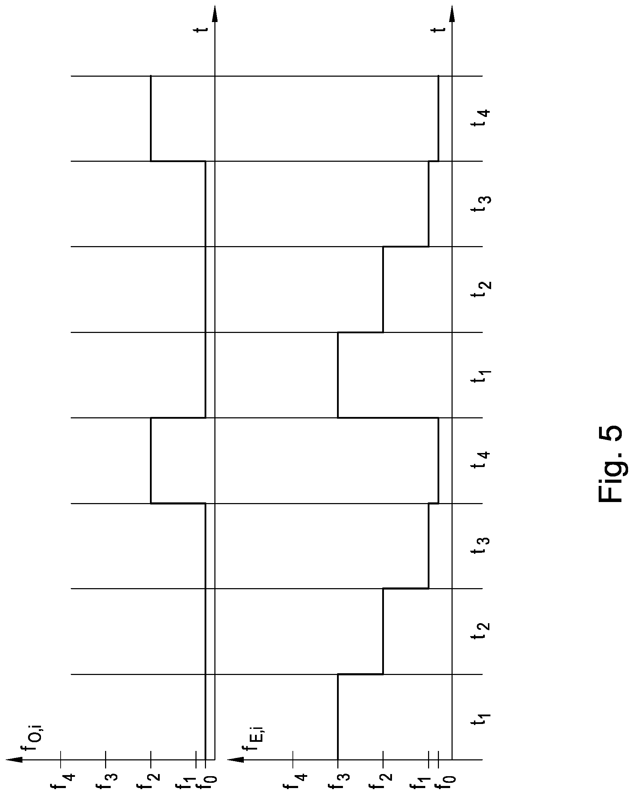

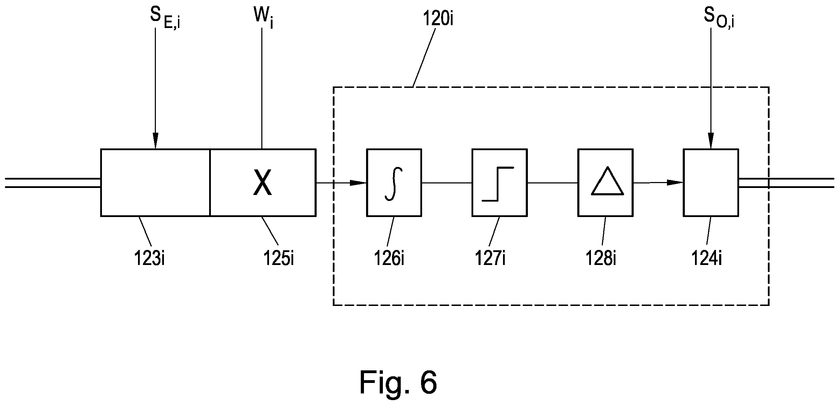

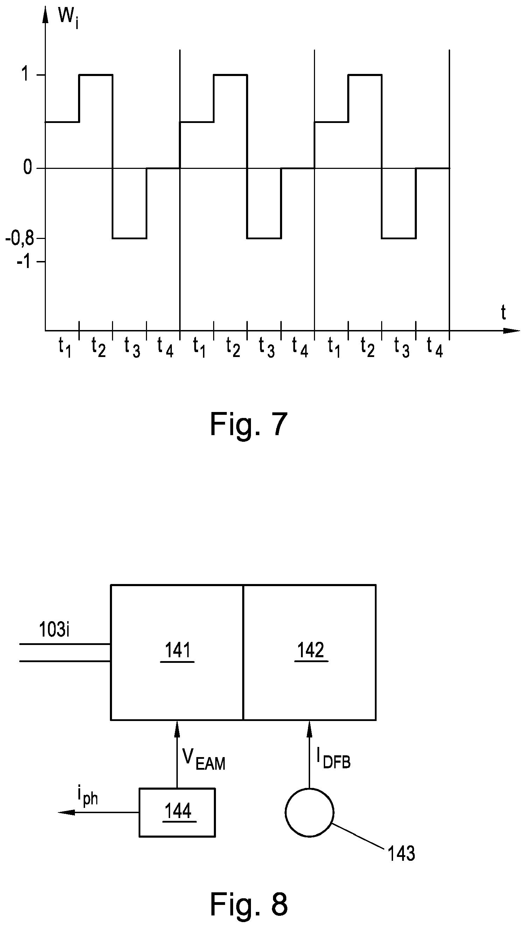

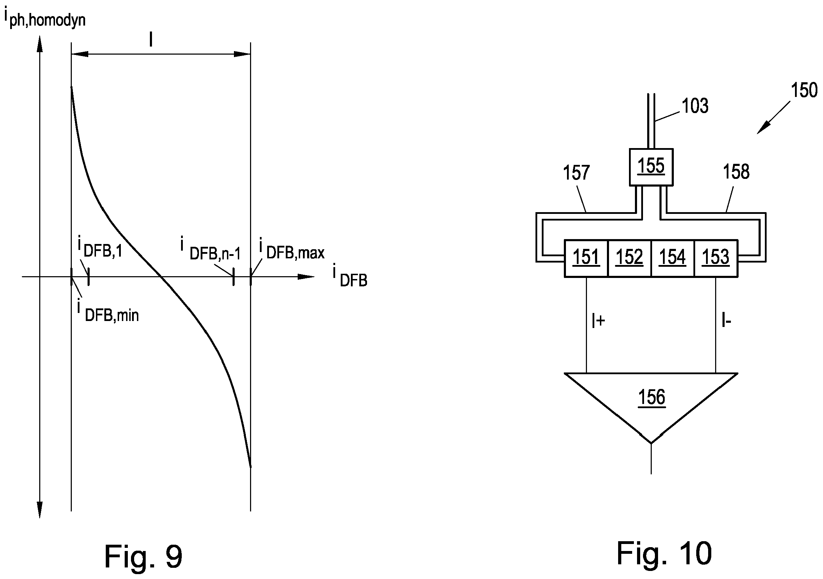

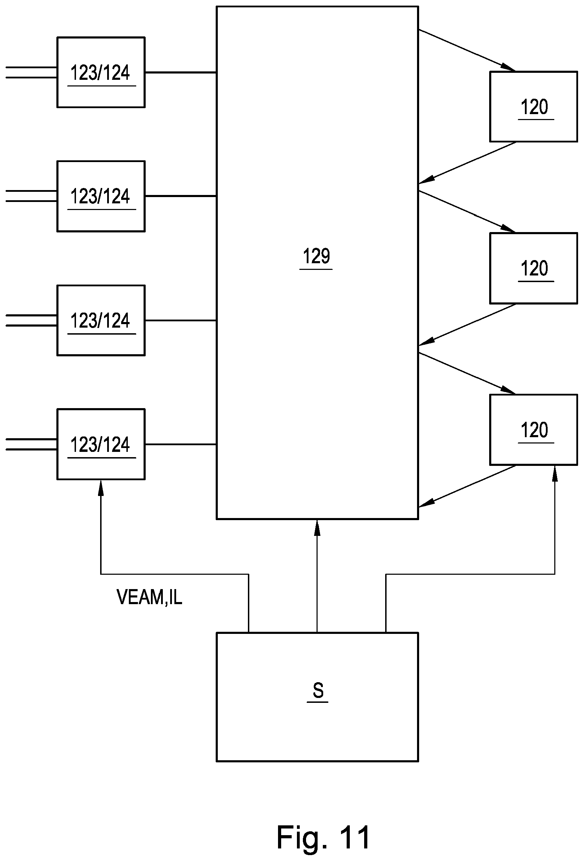

In **Fig.** 1 ist eine erste Ausführungsform einer erfindungsgemäßen Anordnung zur optischen Datenverarbeitung schematisch dargestellt. **Fig.** 2 zeigt ein neuronales Netzwerk, das mit der in Fig. 1 dargestellten Anordnung realisiert werden kann. **Fig. 3** zeigt schematisch eine mögliche framebasierte Struktur der im neuronalen Netzwerk übertragenen Daten. **Fig. 4** zeigt eine für das in Fig. 2 dargestellte neuronale Netzwerk verwendbare Aufteilung der einzelnen Signalanteile nach Zeitslots und Frequenzkanälen. **Fig. 5** zeigt schematisch das Vorgehen bei der Auswahl von Signalen während einzelner Zeitslots durch einen optischen Empfänger. **Fig. 6** zeigt eine mögliche Realisierung eines Neuronen-Schaltkreises. **Fig. 7** zeigt schematisch eine Gewichtungsfunktion zur Verwirklichung der Funktion eines Neurons. **Fig. 8** zeigt eine bevorzugte Realisierung einer Struktur, die je nach Ansteuerung als optoelektrischer Empfänger und als optoelektrischer Emitter verwendet werden kann. **Fig. 9** zeigt eine vorteilhafte Möglichkeit, durch Einstellung des Laserstroms bei der in Fig. 8 oder 10 dargestellten Ausführungsform eine Gewichtung der einlangenden Signale zu bewirken. **Fig. 10** zeigt eine verbesserte Variante der Erfindung, die eine Unterdrückung der direkten Detektion erlaubt, ein Übersprechen zwischen Frequenzkanälen verhindert und damit die störungsfreie Verwendung einer größeren Anzahl von Frequenzkanälen ermöglicht. **Fig. 11** zeigt schematisch einen programmierbaren neuronalen Schaltkreis, mit dem durch Programmierung in eine Vielzahl von unterschiedlichen Neuronalen Netzwerken hergestellt werden kann.

### Basis-Aufbau der optisch-elektronischen Anordnung

In **Fig. 1** ist eine erste Ausführungsform einer erfindungsgemäßen Anordnung 100 zur optischen Datenverarbeitung schematisch dargestellt. Die vorliegende Ausführungsform umfasst einen optischen Eingang I sowie einen optischen Ausgang O. Grundsätzlich können erfindungsgemäße Anordnungen eine beliebige Anzahl von Eingängen I und Ausgängen O aufweisen.

Der optische Eingang I sowie der optische Ausgang O sind jeweils mittels eines optischen Wellenleiters 101, 102, wie z.B. einer Glasfaserverbindung, an einen zur Anordnung 100 gehörigen optischen Hub 110 angeschlossen. Der optische Hub 110 ist als Sternkoppler ausgeführt.

Neben den beiden Anschlüssen 111, 112 für die von Eingang I und Ausgang O kommenden optischen Wellenleiter 101, 102 weist der optische Hub 110 auch eine Anzahl von weiteren optischen Anschlüssen 113a, ..., 113j, 114a, ..., 114j auf. Der optische Hub 110 hat die Eigenschaft, dass jedes über einen optischen Anschluss 113a, ..., 113j, 114a, ..., 114j bei ihm eintretende optische Signal an alle übrigen optischen Anschlüsse 113a, ..., 113j, 114a, ..., 114j verteilt wird. Alle optischen Anschlüsse 113a, ..., 113j, 114a, ..., 114j des optischen Hubs 110 sind grundsätzlich bidirektional, d.h. durch diese können elektromagnetische Wellen in den optischen Hub 110 hinein geführt wie auch aus diesem heraus geführt werden.

An die weiteren optischen Anschlüsse 113a, ..., 113j, 114a, ..., 114j des optischen Hubs 110 sind optische Wellenleiter 103a, ..., 103j, 104a, ..., 104j angeschlossen, die zu jeweils einem optoelektrischen Koppler 123a, ..., 123j, 124a, ..., 124j eines optoelektrischen Schaltkreises 120 führen.

Die einzelnen optoelektrischen Koppler 123a, ..., 123j, 124a, ..., 124j können dabei als optoelektrischer Empfänger 123a, ..., 123j oder optoelektrischer Emitter 124a, ..., 124j ausgeführt oder konfiguriert sein. Auch wenn im vorliegenden Fall die Anzahl der optoelektrischen Empfänger der Anzahl der optoelektrischen Emitter 124a, ..., 124j entspricht, kann diese im Allgemeinen abweichen.

### Emulation eines neuronalen Netzes

In **Fig. 2** ist ein Diagramm eines mit der in Fig. 1 dargestellten Schaltung zu emulierenden neuronalen Netzwerks NN dargestellt, das insgesamt zehn (10) Neuronen N₁, ..., Nⱼ enthält. Zur Emulation dieses neuronalen Netzwerks NN wird die in Fig. 1 dargestellte Anordnung 100 verwendet, die in ihrem optoelektrischen Schaltkreis 120 insgesamt zehn (10) Neuronen-Schaltkreise 120a, ..., 120j aufweist, von denen jeder einzelne jeweils das Verhalten eines der Neuronen N₁, ..., Nⱼ emuliert. Jeder Neuronen-Schaltkreis 120a, ..., 120j weist jeweils einen optoelektrischer Empfänger 123a, ..., 123j und einen diesem zugeordneten optoelektrischer Emitter 124a, ..., 124j auf.

Um die in Fig. 2 geforderte spezifische Datenübertragung zwischen den einzelnen Neuronen N₁, ..., Nⱼ des neuronalen Netzwerks zu ermöglichen, werden alle mit den optoelektrischen Emittern 124a, ..., 124j erstellten Ausgangssignale über den optischen Hub 110 übermittelt, der diese an alle optoelektrischen Empfänger 123a, ..., 123j weiterleitet. Somit werden alle von den Neuronen-Schaltkreisen 120a, ..., 120j erstellten Signale über den Hub 110 an alle optoelektrischen Empfänger 123a, ..., 123j übermittelt. Zur Auswahl bzw. Filterung der einzelnen übertragenen Signale werden die optoelektrischen Empfänger 123a, ..., 123j als Eingänge der Neuronen-Schaltkreise 120a, ..., 120j herangezogen.

### Dateninhalt und Datenübertragung

Die Auswertung der einzelnen Ergebnisse der emulierten Neuronen wird dabei synchronisiert und framebasiert vorgenommen. Zu diesem Zweck werden einzelne Frames F_{1,} F₂, ... (**Fig. 3**) mit jeweils konstanter Länge, z.B. 400 ps, vorgegeben. Während eines jeden Frames F_{1,} F₂, ... empfangen einerseits die optischen Empfänger 123a, ..., 123j optische Signale und setzen diese nach vorgegebenen Kriterien um, andererseits übertragen die optischen Emitter 124a, ..., 124j die während dieses Frames F₁, F₂, ... ermittelten Ergebnisse.

Da ein Datenaustausch zwischen allen beteiligten optischen Emittern 124a, ..., 124j und Empfängern 123a, ..., 123j letztlich über denselben Hub 110 stattfindet, werden die während eines Frames F_{1,} F₂, ... abgegebenen Signale voneinander zeitlich und/oder hinsichtlich ihrer Frequenz abgegrenzt, um ein Übersprechen zu verhindern, d.h. um zu vermeiden, dass diese verschiedenen Signale, die über den optischen Hub 110 laufen, interferieren.

Um die optischen Signale entsprechend voneinander abzugrenzen und um ein unbeabsichtigtes Übersprechen zu vermeiden, wird der verwendete Frame F_{1,} F₂, ... in zeitlicher Hinsicht in eine Mehrzahl von Slots t₁, t₂, t₃, t₄ unterteilt. Im vorliegenden Fall wird der Frame F mit einer Dauer von 400 ps in insgesamt vier Slots t₁, t₂, t₃, t₄ mit einer Dauer von jeweils 100 ps unterteilt. Zudem werden für die Kommunikation insgesamt vier (4) Frequenzkanäle zur Verfügung gestellt, sodass während eines Frames jeweils 16 separate Signale übertragen werden können.

Im vorliegenden Ausführungsbeispiel enthält jedes Signal jeweils die Information "aktiviert" bzw. "nicht aktiviert". Während eines Frames F_{1,} F₂, ... können damit zwischen den einzelnen Neuronen-Schaltkreisen 120a, ..., 120j insgesamt 16 binäre Informationen pro Frame F_{1,} F₂, ... ausgetauscht werden. Durch Erhöhung der Anzahl der verwendeten Frequenzkanäle sowie der Verkürzung der Slots t₁, t₂, t₃, t₄ kann die Datenrate der Informationsübertragung zwischen den einzelnen Neuronen-Schaltkreisen 120a, ..., 120j weiter gesteigert werden. Grundsätzlich ist es auch möglich, die Signalamplitude am optischen Emitter 124a, ..., 124j entsprechend zu skalieren, um eine höhere Informationsdichte durch die Vorgabe unterschiedlicher Signalstärken zu erhalten, z.B. indem während eines Frames insgesamt vier mögliche Amplituden zur Verfügung stehen.

### Neuronen-Schaltkreise

Die zu emulierenden Neuronen-Schaltkreise 120a, ..., 120j weisen im vorliegenden Ausführungsbeispiel jeweils einen optischen Empfänger 123a, ..., 123j und einen optischer Emitter 124a, ..., 124j auf. Dabei sind der optische Empfänger 123a und der optische Emitter 124a, der optische Empfänger 123b und der optische Emitter 124b, usw einander zugeordnet. Sie gehören zu einem Neuronen-Schaltkreis 120a, 120b, mit dem jeweils ein Neuron Nₐ, N_{b} emuliert wird.

Während die in **Fig. 2** dargestellten Neuronen Nₐ, ..., Nⱼ jeweils ausschließlich Zugriff auf die Ausgänge ihrer jeweils vorgeschalteten Neuronen Nₐ, ..., Nⱼ bzw. die Eingänge haben, ist aufgrund der Datenübertragung über den gemeinsamen optischen Hub 110 der optische Eingang eines jeden Neuronen-Schaltkreises 120a, 120b, ... jedem optischen Emitter 124a, 124b, ... sowie jedem Eingang nachgeschaltet, da letztlich alle Signale über den optischen Hub 110 ausgetauscht werden. Damit die in Fig. 1 dargestellte Schaltung die in Fig. 2 dargestellte Topologie realisieren bzw. emulieren kann, wählen alle Neuronen-Schaltkreise 120a, 120b, ... jeweils diejenigen Signale aus, die für ihren Zweck jeweils erforderlich sind, um die Topologie zu realisieren.

Um in einem Neuronen-Schaltkreis 120a, 120b, ... eine entsprechende gewichtete Addition der eingehenden Signale vornehmen zu können, wählt jeder Neuronen-Schaltkreis 120a, 120b, ... in jedem der Slots t₁, t₂, t₃, t₄ innerhalb eines Frames F jeweils nur einen Frequenzkanal f₁, f₂, f₃, f₄ aus. Zur Nachbildung der Funktion eines Neurons wird nur die zum jeweiligen Slot im jeweiligen Frequenzkanal übertragene Information für eine gewichtete Addition verwendet. Bevorzugt kann dabei ein optischer Empfänger 123a, ..., 123j während der Dauer jedes der Slots t₁, t₂, t₃, t₄ jeweils selektiv für jeweils einen der Frequenzkanäle f₁, f₂, f₃, f₄ eingestellt werden.

Um eine einfache Detektion zu gewährleisten, kann durch geschickte Wahl der Zuordnung von Informationen in Slots t₁, t₂, t₃, t₄ und Frequenzkanäle f_{1;} f₂, f₃, f₄ erreicht werden, dass zwei Informationen, die für ein Neuron relevant sind, nicht innerhalb desselben Slots t₁, t₂, t₃, t₄ übertragen werden. Wenn für eines der Neuronen zwei relevante Informationen zur gleichen Zeit übertragen werden, kann auch vorgesehen sein, dass eine so übertragene Information zu einem späteren Slot t₁, t₂, t₃, t₄ innerhalb des Frames F nochmals übertragen wird.

In beiden Fällen ist damit sichergestellt, dass jeder Neuronen-Schaltkreis 120a, 120b, ... durch entsprechende Einstellung seiner optischen Empfänger 123a, ..., 123j alle zur Bildung des Ausgangssignals des Neurons entsprechenden Informationen verarbeiten kann, ohne dass der jeweilige Neuronen-Schaltkreis 120a, 120b, ... gleichzeitig Signale bei zwei Frequenzen empfangen muss.

Alternativ besteht - sofern dies der betreffende optische Empfänger 123a, ..., 123j zulässt - auch die Möglichkeit, den optischen Empfänger 123a, ..., 123j während des Slots t₁, t₂, t₃, t₄ zwischen den vorgegebenen Frequenzbändern f₁, f₂, f₃, f₄ zu wechseln und die geringere Zeit, die für die Erfassung des Signals zur Verfügung steht, durch entsprechend höhere Gewichtung zu berücksichtigen. Dieses Vorgehen kommt im Ergebnis einer Halbierung der Zeiten der Slots gleich.

### Realisierung eines neuronalen Netzwerks

Eine Möglichkeit, die einzelnen Signale vorteilhaft auf Positionen zu setzen, die es ermöglicht, das vorliegende neuronale Netzwerk NN umzusetzen, ist in **Fig. 4** dargestellt. Wie bereits erwähnt, kann eine Akkumulation der Signale vorteilhaft vorgenommen werden, wenn diejenigen Informationen, die innerhalb eines Frames F vom selben Neuronen-Schaltkreis 120a, 120b, ... verarbeitet werden, zu unterschiedlichen Slots t₁, t₂, t₃, t₄ vorliegen und verarbeitet werden.

So benötigt beispielsweise das Neuron Nᵢ die Signalinformationen i₈, i₉ und i₁₀, sodass diese nicht gleichzeitig, d.h. nicht im selben Slot, übertragen werden sollten bzw. dass die entsprechenden Signalinformationen f₁, f₂, f₃, f₄ in unterschiedlichen Slots t₁, t₂, t₃, t₄ innerhalb des Frames F zur Verfügung stehen sollten - schließlich besteht auch die Möglichkeit, dass eine Signalinformation in zwei unterschiedlichen Slots t₁, t₂, t₃, t₄ übertragen wird. Im vorliegenden Fall ist gewährleistet, dass die einzelnen Signale, die vom selben Neuron verwendet werden, jeweils in unterschiedlichen Slots t₁, t₂, t₃, t₄ innerhalb desselben Frames F zur Verfügung stehen, sodass eine Akkumulation dieser Signale vom jeweiligen Neuronen-Schaltkreis 120a, 120b, ... innerhalb des Frames F vorgenommen werden kann.

Auf dieselbe Weise sind auch die folgenden Paare bzw. Tripel von in einem Neuron Nₐ, ..., Nⱼ genutzten Signalen so verteilt, dass für jedes benötigte Signal jeweils ein eigener Slot t₁, t₂, t₃, t₄ zur Verfügung steht: (i₄, i₅); (i₅, i₆); (i₄, i₇); (i₈, i₉); (i₈, i₉, i₁₀); (i₁₀, i₁₁). Damit lässt sich insgesamt festhalten, dass die Anzahl der Slots pro Frame zumindest der Anzahl der Eingänge desjenigen Neurons Nₐ, ..., Nⱼ aufweisen sollte, der unter allen Neuronen die maximale Anzahl an Eingängen aufweist. Die Gesamtzahl der von den Neuronen Nₐ, ..., Nⱼ verwendeten Signale i₁, ..., i₁₁, o₁, ..., o₃ sollte geringer sein als das Produkt der Anzahl der verwendeten Slots mit der Anzahl der verwendeten Frequenzbereiche.

Die grundsätzliche Vorgehensweise der Ansteuerung eines Neuronen-Schaltkreises 120a, 120b, ... soll nun anhand des Neurons Nᵢ näher in **Fig. 6** dargestellt werden. Dieses Neuron Nᵢ ist durch den Neuronen-Schaltkreis 120i implementiert, der den optischen Empfänger 123i und den optischen Emitter 124i sowie die zwischen diesen liegende und in **Fig. 6** dargestellte elektronische Schaltung mit einer Gewichtungseinheit 125i, einem Integrator 126i, einer Schwellenwertbildungseinheit 127i sowie einem Verzögerungsglied 128i umfasst.

### Synchronisation

Der Neuronen-Schaltkreis 120i arbeitet dabei framebasiert, d.h. er gibt im jeweils zeitlich nachfolgenden Frame Fₙ₊₁ an seinem optischen Emitter 124i ein Signal aus, das auf den in diesem Frame Fₙ erhaltenen Signalen i₈, i₉, i₁₀ basiert. Dieses Ausgangssignal o₂ wird dann entsprechend der Vorgabe im Diagramm von **Fig. 4** im vierten Slot t₄ mit im Frequenzbereich f₂ abgegeben, sodass am Ausgang eine Laserfrequenz fOᵢ = f₂ gewählt wird. Dieses Vorgehen wiederholt sich, wie in **Fig. 5** dargestellt, periodisch.

Um eine einheitliche Verwendung der Frames F und Slots t₁, t₂, t₃, t₄ sicherzustellen, sind die einzelnen Neuronen-Schaltkreise 120a, ..., 120i miteinander synchronisiert, d.h. jeder der Neuronen-Schaltkreise 120a, ..., 120i verfügt über einen Takteingang, der jeweils den Beginn eines Frames F bzw. eines Slots indiziert. Ebenfalls ist im vorliegenden Ausführungsbeispiel sichergestellt, dass die vor- und nachgeschalteten Einheiten, von denen die Eingangssignale i1, i2, i3 herrühren bzw. zu denen die Ausgangssignale o1, o2, o3 gesendet werden, entsprechend synchronisiert sind, sodass sämtliche übermittelten Signale dem in Fig. 3 dargestellten Timing-Diagramm entsprechen.

### Auswahl des Frequenzbereichs

Langt ein optisches Signal am optischen Empfänger 123i ein, so wird dieses frameweise weiterverarbeitet. Im Folgenden wird die Vorgehensweise bei der Emulation des Neurons Nᵢ näher dargestellt. Im ersten Slot t₁ innerhalb des Frames F wählt der optische Empfänger 123i mittels des Auswahlsignals s_{E,i} den Frequenzbereich f_{E,i} (t₁)= f₃ aus, sodass er das Signal i₁₀ empfängt. Im zweiten Slot t₂ innerhalb des Frames F wählt der optische Empfänger 123i den Frequenzbereich f_{E,i} (t₂)= f₂ aus, sodass er das Signal i₈ empfängt. Im dritten Slot t₃ innerhalb des Frames F wählt der optische Empfänger 123i den ersten Frequenzbereich f_{E,i} (t₃)= f₁ aus, sodass er das Signal i₉ empfängt. Da während des vierten Slots t₄ kein für die Bildung des Ergebnisses des Neuronen-Schaltkreises 120i erforderliches Signal vorliegt, ist die durch das Auswahlsignals f_{E,i} getroffene Auswahl ohne Belang, das entsprechend ausgewählte Signal wird später unterdrückt bzw. nicht weiter berücksichtigt. Besonders bevorzugt kann auch ein zusätzliches Frequenzband f₀ ausgewählt werden, für das sichergestellt ist, dass die Signalenergie einen vorgegebenen Schwellenwert unterschreitet, sodass am optischen Empfänger 123i kein Signal erhalten wird.

### Gewichtung beim Empfang der Signale

Der Gewichtungseinheit 125i eines jeden Neuronen-Schaltkreises 120i ist dabei ein Gewichtssignal zugeführt. Dieses enthält für jeden einzelnen Zeitslot tᵢ ein separates Gewicht, sodass jedes ausgewählte Eingangssignal jeweils mit einem separat vorgegebenen Gewicht gewichtet werden kann. Diese Gewichte können grundsätzlich im Rahmen eines Lernprozesses für das neuronale Netz vorgegeben bzw. angepasst werden.

Soll beispielsweise im Neuron Nᵢ eine Gewichtung so vorgenommen werden, dass das Signal i₈ mit einem Gewicht von 1, das Signal i₉ mit einem Gewicht von -0.8 und das Signal i₁₀ mit einem Gewicht von 0.4 gewichtet werden soll, so wird ein Gewichtssignal wᵢ (Fig. 7) erstellt, das während des ersten Zeitslots t₁, in dem die Gewichtungseinheit 125i den dritten Frequenzkanal ausgewählt hat und dementsprechend das Signal i₁₀ erhält, einen Gewichtungswert wᵢ von 0.4 vorgibt. Während des zweiten Zeitslots t₂, in dem die Gewichtungseinheit 125i den zweiten Frequenzkanal f₂ ausgewählt hat und dementsprechend das Signal i₈ erhält, hat das Gewichtssignal wᵢ einen Gewichtungswert von 1. Schließlich hat das Gewichtssignal wᵢ während des dritten Zeitslots t₃, in dem die Gewichtungseinheit 125i den ersten Frequenzkanal ausgewählt hat und dementsprechend das Signal i₉ erhält, einen Gewichtungswert wᵢ von -0.8. Da für das Neuron Nᵢ lediglich diese drei Werte von Bedeutung sind, braucht im vierten Zeitslot t₄ kein weiterer Wert verarbeitet werden. Der Gewichtungswert wird in diesem Zeitslot t₄ dementsprechend auf 0 festgesetzt.

Sämtliche Werte der Gewichtungssignale wᵢ für jeden der Zeitslots tᵢ können elektronisch eingestellt und vorgegeben werden. Im Rahmen der Verarbeitung der Werte bilden diese jeweils Gewichte zur Festlegung der Funktion des neuronalen Netzwerks NN, sie bestimmen, wie stark die ausgewählten Werte gewichtet werden. Diese Werte können auch im Rahmen des Lernprozesses des neuronalen Netzwerks NN angepasst und geändert werden, um das neuronale Netzwerk NN an die jeweilige Aufgabe anzupassen. Alle diese Gewichtungswerte wᵢ sowie die Werte der in **Fig. 5** dargestellten Werte der einzelnen Auswahlfunktionen f_{E,i} werden grundsätzlich im Rahmen des Lernprozesses für das neuronale Netz NN festgelegt. Sie können mit Standard-Methoden für das maschinelle Lernen bei neuronalen Netzen NN festgelegt werden.

### Optionale Gewichtunqsmatrix

Grundsätzlich ist es möglich, zwischen die Gewichtungseinheiten 125a, ..., 125k und den Integrationseinheiten 126a, ..., 126k eine gemeinsame - nicht dargestellte-Gewichtungsmatrix zwischenzuschalten. Diese enthält so viele Eingänge wie Gewichtungseinheiten 125a, ..., 125k vorhanden sind und so viele Ausgänge wie Integrationseinheiten 126a, ..., 126k vorhanden sind. Im Zuge der Gewichtung wird jeder Ausgangswert, der an die jeweilige Integrationseinheit 126a, ..., 126k weitergeleitet wird, als gewichtete Summe der einzelnen elektrischen Signale erstellt, die am Ausgang der Gewichtungseinheiten 125a, ..., 125k anliegen. Mit einer solchen Gewichtungsmatrix ist es möglich, eine zusätzliche Vermischung der ermittelten Signale zu erreichen, was grundsätzlich die Erstellung stärker vernetzter neuronaler Netzwerke ermöglicht. Die einzelnen in der Gewichtungsmatrix für die Bildung der gewichteten Summen gespeicherten Gewichtungswerte können im Zuge eines Lernverfahrens festgelegt, abgeändert und angepasst werden.

Grundsätzlich ist es auch möglich, dass die Anzahl der Eingänge und Ausgänge der Gewichtungsmatrix nicht identisch sind. In diesem Fall weist das neuronale Netzwerk so viele Neuronen N auf, wie Ausgänge der Gewichtungsmatrix bzw. optische Emitter 124 vorhanden sind, die Eingänge bzw. die optischen Empfänger 123 lassen sich in diesem Fall nicht mehr eindeutig einem Neuron N zuordnen.

Das Vorsehen einer Gewichtungsmatrix stellt jedoch nur eine bevorzugte Weiterbildung der Erfindung dar, eine stärkere Verknüpfung der einzelnen Eingangswerte zu erreichen. Im Rahmen der Erfindung ist die Verwendung einer Gewichtungsmatrix jedoch nur optional und zur Erreichung des Zwecks der Erfindung keineswegs erforderlich.

### Integration

Die derart empfangenen, überlagerten bzw. gemischten Signale werden anschließend separat in einem Integrator 126i integriert, um einem Neuronen-Schaltkreis 120 gemäß dem McCulloch-Pitts Neuronen-Modell zu genügen, das in der folgenden Publikation beschrieben ist: W. McCulloch, and W. Pitts, "A logical calculus of the ideas immanent in nervous activity," Bull. Math. Biophys., vol. 5, no. 4, pp. 115-133, Dec. 1943. Die Integration wird dabei vorzugsweise frameweise durchgeführt, d.h. aufgrund der zuvor erfolgten Synchronisation wird der Integrationswert am Beginn des Frames F vorab auf einen vorgegebenen Nullwert rückgesetzt, während des Frames F werden die einzelnen gewichteten Signale aufintegriert, sodass am Ende des Frames F ein Wert anliegt, der einer gewichteten Summe der am jeweiligen optischen Eingang anliegenden Signalwerte entspricht.

Sofern eine Gewichtungsmatrix verwendet wird, ergibt sich am Ende des Frames F ein Wert, der einer gewichteten Summe von mehreren an den optischen Eingängen anliegenden Signalwerte entspricht.

Der Integralwert, der am Ende des Frames F am Ausgang des Integrators 126i anliegt, wird an eine dem Integrator 126i nachgeschaltete und demselben Neuronen-Schaltkreis 120i zugeordnete Schwellenwertschaltung 127i weitergeleitet. Der jeweilige Schwellenwert kann dabei - sofern erforderlich - im Zuge des Lernprozesses adaptiert werden, um so das Neuron N an die Bedingungen der Aufgabenstellung anzupassen. Grundsätzlich kann dieselbe Wirkung aber auch erzielt werden, wenn bei der Schwellenwertschaltung 127i ein fixer Schwellenwert voreingestellt wird und die zuvor erfolgte Gewichtung entsprechend verändert wird. Ebenso reicht es auch aus, einen oberen Schwellenwert vorzugeben, der am Ende des Frames F überschritten sein muss; durch entsprechende Abänderung der Gewichte lässt sich nämlich auch die Vorgabe eines Schwellenwerts, der am Ende des Frames F unterschritten sein muss durch Vorgabe eines zu überschreitenden Schwellenwerts ausdrücken. Im vorliegenden Ausführungsbeispiel ist der Zeitpunkt, zu dem eine Schwellenwertüberschreitung festgestellt werden soll, das Ende des jeweiligen Frames F.

### Zeitverzögerung und Siqnalerstellunq

In einer bevorzugten Ausführungsform der Erfindung kann zusätzlich auch vorgesehen sein, dass an einer Stelle der Ausgangsschaltung ein - elektrisches oder optisches-Zeitverzögerungsglied 128i vorgesehen ist. Mit diesem Zeitverzögerungsglied 128i ist es möglich, bei Überschreitung des Schwellenwerts ein Signal zu einem definierten Zeitpunkt während des nachfolgenden Frames abzugeben. Dies kann beispielsweise eingesetzt werden, um für das Ausgangssignal einen vorgegebenen Slot t₁, t₂, t₃, t₄ innerhalb des jeweils nachfolgenden Frames F auszuwählen.

Insbesondere kann zur Erstellung eines Ausgangssignals des jeweiligen Neurons Nᵢ auch vorgesehen sein, mehrere Signale im nachfolgenden Frame zu unterschiedlichen Zeitpunkten, allenfalls auch in unterschiedlichen Frequenzkanälen abzugeben. Anstelle eines Zeitverzögerungsglieds 128i wird dann eine Einheit zur Erstellung des Ausgangssignals verwendet, die für jeden Slot t₁, t₂, t₃, t₄ den jeweiligen zu verwendenden Frequenzkanal für die Abgabe des Signals über den optischen Emitter 124i enthält, wobei gegebenenfalls in einzelnen Slots auch die Möglichkeit besteht, dass kein Signal abgegeben wird.

### Realisierung eines optischen Empfängers

In weiterer Folge werden nun einzelne bevorzugte Ausführungsformen und Weiterbildungen der Erfindung dargestellt, die insbesondere die optoelektronische Umsetzung der einzelnen genannten Komponenten betreffen.

Eine Möglichkeit einer Schaltanordnung eines optoelektrischen Empfängers 123i, die gleichzeitig auch die Funktion der Gewichtungseinheit 125i übernimmt, ist in **Fig. 8** näher dargestellt. Konkret erfolgt die Realisierung der vorstehend genannten Funktionalität eines optischen Empfängers 123i und der Gewichtungseinheit 125i mittels der dargestellten Schaltanordnung 140, die einen Elektroabsorptionsmodulator 141 und einen an diesen angeschlossenen lokalen Laser 142 aufweist. Die Frequenz des lokalen Lasers 142 kann dabei über einen Laserstrom i_{DFB} eingestellt werden, sodass der lokale Laser 142 auf die einzelnen vorgegebenen Frequenzkanäle f₁, ..., f₄ verstimmbar ist.

Die Einstellung der Frequenz bzw. Wellenlänge des lokalen Lasers 142 erfolgt dabei durch Vorgabe Laserstrom i_{DFB} des Lasers 142 in einer Stromquelle 143. Durch die Einstellung der jeweils vorgegebenen Frequenz bzw. Wellenlänge beim lokalen Laser 142 wird der Elektroabsorptionsmodulator 141 sensitiv für einlangende elektromagnetische Wellen innerhalb des jeweiligen Frequenzkanals f₁, ..., f₄. Die Schaltanordnung verwendet dabei einen kohärenten Homodyn-Empfang durch Überlagerung des lokalen Lasersignals mit den von außen über den Wellenleiter 103i einlangenden elektromagnetischen Signalen.

Aufgrund des Effekts des injection-locking ist es nicht zwingend erforderlich, dass die Frequenz des Lasers und die Frequenz der einlangenden elektromagnetischen Wellen exakt gleich sind. Vielmehr besteht auch eine Sensitivität und ein Homodyn-Empfang für Frequenzen, die von der durch den Laserstrom i_{DFB} vorgegebenen Frequenz geringfügig abweichen, d.h. innerhalb eines vorgegebenen Frequenzbereichs I (**Fig. 9**) liegen. Innerhalb dieses für das injection-locking nutzbaren Frequenzbereichs I, der sogenannten locking range, ändert sich die optische Phase des lokalen Lasersignals um den Phasensprung π. Durch die Einstellung des Laserstroms I_{DFB} des Lasers 142 kann somit auch die optische Phase des lokalen Lichts, in Relation zum einfallenden Licht, eingestellt werden.

Der am Elektroabsorptionsmodulator 141 erhaltene Photostrom Iₚₕ umfasst insbesondere die folgenden Anteile:
* ein konstanter Anteil, der von der Energie der vom lokalen Laser 142 abgegebenen elektromagnetischen Wellen herrührt. Dieser konstante vom Laser 142 herrührende Teil, der ein reiner Gleichanteil im Photostrom iₚₕ ist, ist für die weitere Berechnung nicht relevant, jedoch vorab bekannt bzw. durch Kalibrierung in Erfahrung zu bringen. Er kann vorteilhafterweise im Zuge der nachstehenden Verarbeitung unterdrückt bzw. korrigiert werden. Dieser Anteil beinhaltet ebenso das Rauschen des lokalen Lasers (relative intensity noise), welches typischerweise sehr schwach ist. Später wird noch ein Empfängertyp gezeigt, der eine Unterdrückung dieses Rauschens ermöglicht, sollte dieses aufgrund der Ausführung des Lasers stärker sein.
* ein Anteil, der proportional zur Signalenergie der über den Eingang einlangenden elektromagnetischen Wellen ist. Dieser Anteil, der ausschließlich von den einlangenden elektromagnetischen Wellen abhängig ist, ist relativ klein, da die Signalenergie dieser elektromagnetischen Wellen verglichen mit der Signalenergie des Lasers gering ist. Diese Signalenergie bzw. der durch diese Signalenergie hervorgerufene Anteil am Photostrom am Ausgang des Elektroabsorptionsmodulators kann für die weiteren Zwecke vernachlässigt werden. Später wird noch ein Empfängertyp gezeigt, der eine weitere Unterdrückung dieser Signalanteile ermöglicht, was insbesondere dann von Vorteil sein kann, wenn eine große Vielzahl von Frequenzkanälen verwendet wird.
* ein Anteil, der vom Homodyn-Empfang herrührt und der proportional zur Energie des Anteils der elektromagnetischen Wellen ist, die homodyn mit einer Frequenz empfangen werden, die der lokale Laser 142 aufgrund des injection-locking angenommen hat. Der homodyne Anteil am Photostrom i_{ph,homodyn} am Ausgang des Elektroabsorptionsmodulators 141 kann vorteilhaft durch die Vorgabe des Laserstroms beeinflusst werden. Grundsätzlich reicht es, wie in **Fig. 9** dargestellt, für ein injection-locking aus, dass der Laserstrom i_{DFB} innerhalb eines vorgegebenen Bereichs I liegt, um ein injection-locking, d.h. ein Einrasten der Frequenzen des Lasers auf das einlangende Licht zu bewerkstelligen.

Je nach Wahl des Laserstroms i_{DFB} ergeben sich dabei jedoch unterschiedliche Phasenverschiebungen zwischen den beim Elektroabsorptionsmodulator 141 einlangenden elektromagnetischen Wellen. Liegt der Laserstrom i_{DFB} bei einem Wert im linken Bereich des Diagramms in Fig. 9, z.B. bei einem Wert von i_{DFB,min}, wirken sich die Signalanteile der einlangenden elektromagnetischen Wellen, die innerhalb des ausgewählten Frequenzbereichs I liegen, negativ auf den gemessenen Photostrom iₚₕ aus, d.h. der Photostrom iₚₕ zeigt ein negatives Vorzeichen, wenn Laseranteile im ausgewählten Frequenzbereich einfallen.

Liegt der Laserstrom i_{DFB} hingegen bei einem Wert im rechten Bereich des Diagramms in **Fig. 9****,** z.B. bei einem Wert von i_{DFB,max}, wirken sich die Signalanteile der einlangenden elektromagnetischen Wellen, die innerhalb des ausgewählten Frequenzbereichs I liegen, positiv auf den gemessenen Photostrom iₚₕ aus, d.h. der Photostrom iₚₕ zeigt ein positives Vorzeichen sich, wenn Laseranteile im ausgewählten Frequenzbereich einfallen.

### Positiv/negative Gewichtung mittels Einstellung des Laserstroms

Dies ermöglicht es, durch Setzen eines Laserstroms das Vorzeichen der ermittelten Photoströme zu setzen, was gerade für Anwendungen im Bereich der neuronalen Netze von Vorteil ist, weil Neuronen, die einzelne Signalanteile negative gewichten, mit dieser Methode emuliert werden können.

Wie aus **Fig. 9** erkennbar ist, kann durch Vorgabe des Laserstroms nicht nur das Vorzeichen des von den homodyn empfangenen Signalanteilen bewirkten Anteils i_{ph,homodyn} am Photostrom iₚₕ eingestellt werden; vielmehr ist es möglich, diesen Anteil am Photostrom auch zu skalieren, indem Laserströme i_{DFB,1}, ..., i_{DFB,n-1} verwendet werden, die sich zwischen den beiden Extrema i_{DFB,min}, i_{DFB,max} für den Homodyn-Empfang befinden. Auf diese Weise ist es möglich, die einlangenden Signale für die weitere Verarbeitung zu gewichten.

Bevorzugt kann die Einstellung der zur Detektion verwendeten Photoströme i_{DFB,min}, i_{DFB,max} dadurch erfolgen, dass über den Wellenleitereingang ein optischer Pilotton, d.h. eine elektromagnetische Welle mit konstanter Amplitude und Frequenz, vorzugsweise in Sinusform, an den optischen Empfänger 123i übermittelt wird. Der Laser 142 wird durch Einstellung eines Laserstroms i_{DFB} auf den Pilotton abgestimmt, sodass der Effekt des injection-locking auftritt und am Anschluss des Elektroabsorptionsmodulators 141 ein elektrisches Signal in Sinusform ermittelt werden kann. In einer Analyseeinheit werden der optische Pilotton bzw. ein elektrisches Referenzsignal, das mit dem optischen Pilotton in einer vorgegebenen Phasenbeziehung steht, und das am elektrischen Anschluss des Elektroabsorptionsmodulators 141 anliegende elektrische Signal miteinander verglichen und deren Phasendifferenz bestimmt. Durch Variation des Laserstroms i_{DFB} können nun innerhalb der locking-range diejenigen Werte i_{DFB,max}, i_{DFB,min} für den Laserstrom i_{DFB} gefunden werden, bei denen die Phasendifferenz 0° bzw. 180° beträgt. Ebenso können für die Durchführung einer Gewichtung im Rahmen der Kalibrierung auch weitere Laserströme i_{DFB,1}, ..., i_{DFB,n-1} gesucht werden, die - verglichen mit der Verwendung der Extremwerte Werte i_{DFB,max}, i_{DFB,min} - eine vorgegebene Gewichtung des erhaltenen Photostroms iₚₕ ermöglichen.

In einer bevorzugten Variante kann auch vorgesehen sein, eine Abstimmung der Photoströme aller optischen Empfänger 123a, ..., 123j und aller optischen Sender 124a, ..., 124j vorzunehmen, um einzelne Unterschiede der optischen Empfänger 123a, ..., 123j und optischen Sender 124a, ..., 124j zu kompensieren. In diesem Fall können beispielsweise die Photoströme der Laser 142 der optischen Sender 124a, ..., 124j auf einen vorgegebenen Wert gesetzt werden. Auch wenn hier alle Laser der optischen Sender 124a, ..., 124j mit demselben Laserstrom betrieben werden, können sich bauartbedingt Unterschiede in Stärke und Frequenz ergeben. So zeigt sich experimentell etwa ein relativer Frequenzunterschied von 1.7 GHz in der absoluten optischen Emissionsfrequenz von 193.1 THz, wenn zwei der Bauart "idente" Laser bei selbem Laserstrom und bei selber Temperatur betrieben werden. Diese Unterschiede können derart kompensiert werden, dass bei konstanter Einstellung des Lasers 142 für jeden optischen Sender 124a, ..., 124j an jedem optischen Empfänger 123a, ..., 123j jeweils die zwei Photoströme i_{DFB,min}, i_{DFB,max} ermittelt werden, mit denen das jeweilige Signal einen maximal positiven oder maximal negativen Einfluss auf den ermittelten Photostrom im Empfänger 123a, ..., 123j hat.

Sofern die optischen Sender, z.B. im Zeitmulitplex, mit unterschiedlichen Frequenzkanälen betrieben werden, kann dieser Vorgang für jeden Frequenzkanal wiederholt werden, sodass mit dieser Kalibrierung eine mehrdimensionale Datenstruktur erhalten wird, die für jedes Tripel von optischen Empfängern 123a, ..., 123j, optischen Sendern 124a, ..., 124j und Frequenzkanal jeweils zwei Photoströme i_{DFB,min}, i_{DFB,max} für den Laser am optischen Empfänger 123a, ..., 123j liefert, die dazu verwendet werden können, am angegebenen optischen Empfänger 123a, ..., 123j ein Signal, das vom angegebenen optischen Sender 124a, ..., 124j im angegebenen Frequenzband abgegeben wurde, optimal zu empfangen. Die so ermittelte Datenstruktur ist technisch determiniert und ist nicht Gegenstand des Lernprozesses des neuronalen Netzwerks. Die Kalibrierung kann unabhängig vom Lernprozess erneut ausgeführt werden, um allfällige technisch bedingte Änderungen in den Lasern oder Elektroabsorptionsmodulatoren zu kompensieren.

Sofern nicht bloß eine vorzeichenmäßige Einstellung, sondern auch eine Gewichtung der Signale vorgenommen werden soll, können neben den beiden Extrem-Photoströmen i_{DFB,min}, i_{DFB,max} auch dazwischenliegende Photoströme i_{DFB,1}, ..., i_{DFB,n-1} durch Kalibrierung ermittelt werden.

### Graduelle Gewichtung mittels Einstellung der Vorspannung am Elektroabsorptionsmodulator

Eine bloß mit einem positiven Faktor skalierende, nicht vorzeichenmäßige Gewichtung der homodyn-empfangenen Anteile am Photostrom iₚₕ kann auch alternativ durch Vorgabe einer Vorspannung V_{EAM} am Elektroabsorptionsmodulator 141 vorgenommen werden. Durch diese Maßnahme kann die vorstehend beschriebene skalierende Gewichtung mithilfe der Laserstromeinstellung entfallen, d.h. die Einstellung des Laserstroms beeinflusst lediglich das Vorzeichen der Gewichtung. Grundsätzlich können beide Methoden aber auch gemeinsam eingesetzt werden, um eine feinere Auflösung zu erhalten bzw. den Dynamikbereich der Gewichtung zu erhöhen um, z.B., kleinere Gewichte zu ermöglichen.

An den Elektroabsorptionsmodulator 141 ist im vorliegenden Ausführungsbeispiel über eine Steuereinheit 144 eine Vorspannung V_{EAM} angelegt, über die die Effizienz (Responsivity) des Elektroabsorptionsmodulators 141 angesteuert bzw. festgelegt wird. Durch Variation der Vorspannung entsprechend einem vorgegebenen periodischen Gewichtssignal (**Fig. 7**) kann am Ausgang des Elektroabsorptionsmodulators 141 ein elektrisches Signal erhalten werden, das der Signalstärke des optischen Signals, gewichtet mit dem aktuellen Wert des periodischen Gewichtssignals, aufweist.

Um eine slotweise Gewichtung der einzelnen Signalanteile zu erhalten, können die Vorspannung V_{EAM} sowie die Photoströme i_{DFB,min}, i_{DFB,1}, ..., i_{DFB,n-1}, i_{DFB,max} in Abhängigkeit vom periodischen Gewichtssignal eingestellt werden, sodass der homodyn-empfangene Anteil im Photostrom proportional zu dem im Gewichtungssignal vorgegebenen Gewichtungswert ist.

### Aufbau des optischen Emitters

Der optische Emitter 124i ist im vorliegenden Ausführungsbeispiel (siehe Fig.6) durch eine Kombination eines Elektroabsorptionsmodulators 141 und eines lokalen Lasers 142 ausgebildet und weist damit strukturell dieselbe Form wie die vorstehend beschriebenen optische Empfänger 123a, ..., 123j auf.

Unterschiede zwischen optischem Empfänger 123a, ..., 123j und optischem Emitter 124a, ..., 124j bestehen bei dieser bevorzugten Weiterbildung der Erfindung ausschließlich bei der Ansteuerung. Diese strukturelle Identität hat den Vorteil, dass eine spätere Funktionsänderung der optischen Empfänger 123a, ..., 123j und Emitter 124a, ..., 124j möglich ist, wodurch andere Topologien von neuronalen Netzwerken NN möglich sind.

Mit der hier nachfolgend beschriebenen Realisierung eines optischen Emitters 124a, ..., 124j können optische Ausgangssignale auf unterschiedliche Weise erzeugt werden. So besteht beispielsweise die Möglichkeit, eine vorgegebene Zeitspanne nach der Überschreitung des Schwellenwerts, insbesondere innerhalb der nächsten Zeitperiode, an einem vorgegebenen Zeitpunkt einen optischen Impuls abzugeben.

Es ist natürlich möglich, den optischen Emitter 124a, ..., 124j mittels einer Steuerschaltung anzusteuern, die bei Feststellung einer Schwellenwertüberschreitung durch den Schwellenwertvergleicher den optischen Emitter zur Abgabe eines Lichtimpulses anregt. Dies kann beispielsweise derart erfolgen, dass der Laser 142 dauerhaft aktiviert wird und dass der Elektroabsorptionsmodulator 141 durch Anlegen einer Vorspannung in einen Zustand geschaltet ist, in der dieser für elektromagnetische Wellen undurchlässig ist. Wird im vorangehenden Frame der Schwellenwert überschritten, wird die Vorspannung des Elektroabsorptionsmodulators 141 zeitlich so abgewandelt, dass das Lasersignal den Elektroabsorptionsmodulator 141 zu bestimmten Zeitpunkten passieren kann und sich derart ein optisches Signal am Ausgang des optischen Emitters 124a, ..., 124j ergibt. Ebenso kann eine Repräsentation der Information im optischen Phasenraum erfolgen. Somit wird im Fall einer Überschreitung des Schwellenwerts während des vorangehenden Frames ein optischer Phasensprung um den Wert π auf das Lichtsignal des Lasers 142 aufmoduliert, indem der Laserstrom des Lasers 142 gemäß der mathematischen Ableitung des Ausgangs-Impulssignals des Schwellenwertvergleichers mittels Stromquelle 143 moduliert wird. Eine derartige Repräsentation im Phasenraum bietet spezielle Vorteile, z.B. eine erhöhte Empfindlichkeit bei der optoelektronischen Signaldetektion durch die optischen Empfänger 123a, ..., 123j.

### Gain-Switching

Die Abgabe von optischen Signalen bei Schwellenwertübschreitung kann alternativ auch mit der Methode des Gain-Switching erfolgen. Hierbei wird der der Laser 142 unterhalb des Schwellenwerts einer Zündung voreingestellt. Der Laser 142 wird dann durch die Erhöhung der Spannung am Ausgang des Integrators im jeweils vorangehenden Frame aktiviert, sodass ein Laserimpuls abgegeben wird. Die stimulierte Emission bricht jedoch aufgrund des niedrigen voreingestellten Stroms - und daher der niedrigen Ladungsträgerdichte im aktiven Verstärkungsmedium des Lasers 142 - wieder zusammen, sodass der abgegebene Laserimpuls lediglich nur sehr kurz ausfällt. Auf diese Weise kann ein Lasersignal abgegeben werden, das eine Dauer von etwa 100 ps aufweist, ohne dass für dessen Erstellung eine besondere elektrische Schaltung erforderlich ist, die in der Lage ist, mit Schaltdauern in diesem Zeitbereich umzugehen. In dieser Variante kann der Schwellenwertvergleicher 151 unmittelbar durch den optischen Emitter 126 realisiert werden und der optische Emitter 126 ist unmittelbar an den Integrator angeschlossen.

### Kompensation von Störungen

In **Fig. 10** ist eine alternative Ausführungsform eines optischen Eingangselements beschrieben, die besonders dann eingesetzt werden kann, wenn eine Vielzahl von Frequenzen verwendet wird und Effekte des Übersprechens vermieden werden sollen. Diese Ausführungsform basiert auf den folgenden physikalischen Grundlagen:
Der von einem Elektroabsorptionsmodulator 141 gelieferte Photostrom iₚₕ weist unterschiedliche additive Anteile auf, die von verschiedenen Anteilen des optischen Signals her
rühren, das bei ihm einlangt. Der Photostrom weist einen Anteil auf, der zur Leistung des einlangenden optischen Signals, gerechnet über alle verwendeten Frequenzen proportional ist; dieser Anteil wird als direkter Photodetektionsstrom bezeichnet. Schließlich weist der Photostrom einen additiven Anteil auf, der proportional zur konstanten Leistung des Signals des Lasers ist.

Weiters ist das Signal proportional zur Wurzel des Produkts aus dem Lasersignal und dem Signalanteil im Signal, dessen Frequenz innerhalb der locking-range liegt. Dieser Anteil wird als kohärenter Detektionsstrom bezeichnet, der aus der homodynen Detektion hervorgeht. Der lokale Laser wirkt damit als Frequenzselektor. Dies bedeutet, dass das betreffende Signal innerhalb der locking-range mit dem Lasersignal gehebelt und um einen vorgegebenen Faktor verstärkt wird.

Werden insgesamt sehr viele Frequenzkanäle verwendet, kann der Fall auftreten, dass die Signalenergie des direkten Photodetektionsstroms im Bereich der Signalenergie des kohärenten Photodetektionsstroms liegt, was zu Übersprechen führt und das Signal-Rauschverhältnis verschlechtert. Im schlimmsten Fall besteht das Problem, dass ein falsches Integrationsergebnis vorliegt.

Um dieses Problem zu beseitigen, wird eine optimierte Ausführungsform 150 eines Empfängers 123 dargestellt. Das über den Wellenleiter 103 einlangende optische Signal wird zunächst mittels eines Strahlteilers 155 geteilt. Der Strahlteiler 155 teilt das einlangende Signal in zwei Signalanteile auf, die jeweils dieselbe Signalenergie aufweisen. Grundsätzlich ist es möglich, dass der Strahlteiler 155 auch eine Phasenverschiebung in eines der Signale oder beide Signale einbringt, insbesondere um die Phase π.

Der optische Empfänger 123 weist in der vorliegenden bevorzugten Ausführungsform 150 zwei Elektroabsorptionsmodulatoren 151, 153 auf, die von einem gemeinsamen Laser 152 gespeist werden. Die vom Strahlteiler 155 aufgeteilten Signalanteile werden über optische Wellenleiter 157, 158 jeweils zu einem der Elektroabsorptionsmodulatoren 151, 153 geführt. Die beiden Elektroabsorptionsmodulatoren 151, 153 sind so angeordnet, dass das vom lokalen Laser 152 erzeugte Lasersignal in beide Elektroabsorptionsmodulatoren 151, 153 gespeist werden kann, d.h. dass auch in beiden Signalen eine homodyne Detektion vorgenommen werden kann.

In der vorliegenden Ausführungsform soll nun gewährleistet werden, dass die so empfangenen homodyn detektierten Signale an den Ausgängen der Elektroabsorptionsmodulatoren jeweils um 180° phasenverschoben empfangen werden, während die übrigen Signalanteile, d.h. der konstante vom Laser herrührende Signal sowie das von den direkt detektierten Signalanteilen im optischen Eingang jeweils gleichphasig detektiert werden. Um dies zu gewährleisten, wird zwischen dem Laser 152 und einem der beiden Elektroabsorptionsmodulatoren 153, ein Phasenverschieber 154 zwischengeschaltet, sodass die Phase der vom Laser 152 abgegebenen elektromagnetischen Welle verschoben wird. Die durch den Phasenverschieber 154 eingebrachte Phasenverschiebung kann durch Vorgabe eines elektrischen Signals eingestellt werden, beispielsweise kann durch Anlegen einer Spannung am Phasenverschieber 154 der Brechungsindex eines im Phasenverschieber befindlichen Wellenleiters verändert werden, wodurch sich die Ausbreitungsgeschwindigkeit der elektromagnetischen Wellen im Phasenverschieber ändert, was im Endeffekt die Phasenverschiebung bewirkt.

Diese Phasenverschiebung am Phasenverschieber 154 wird so eingestellt, dass die durch den homodynen Empfang ermittelten Signale I+, I- an den beiden Elektroabsorptionsmodulatoren 151, 153 genau um 180° zueinander phasenverschoben sind. Die anderen direkt empfangenen Signale sowie das Lasersignal, die das Ausgangssignal des Elektroabsorptionsmodulators 151, 153 ebenfalls beeinflussen, sind demgegenüber in den beiden von den Elektroabsorptionsmodulatoren 151, 153 ausgegebenen Signalen I+, I- nicht oder nur um einen geringen Versatz verschoben.

Verwendet man anstelle des bei der in Fig. 8 dargestellten Ausführungsform verwendeten - nicht dargestellten - Transimpedanzverstärkers einen differentiellen Transimpedanzverstärker 156, dem die beiden von den Elektroabsorptionsmodulatoren 151, 153 ausgegebenen Signale I+, I- zugeführt sind, werden die gegenphasigen Signalanteile, d.h. die homodyn detektierten Signalanteile, verstärkt, die anderen Signalanteile löschen sich hingegen weitestgehend aus. Durch diese Maßnahme wird bewirkt, dass am Ausgang des Transimpedanzverstärkers 156, der auch den Ausgang des optischen Empfängers 123 bildet, ein Signal anliegt, in dem Signalanteile aus anderen Frequenzkanälen, sowie das Rauschen (relative intensity noise) des lokalen Laserlichts, stärker unterdrückt sind, als dies bei der in Fig. 8 dargestellten Ausführungsform der Fall ist.

Auf diese Weise ist es möglich, eine wesentlich größere Anzahl von Frequenzkanälen zu verwenden, da ein Übersprechen zwischen einzelnen Frequenzkanälen aufgrund der Unterdrückung der direkt detektierten Signalanteile vermieden wird.

### Weitere Realisierungen

Grundsätzlich ist es auch ohne weiteres möglich, lediglich einen einzigen Frequenzkanal zu verwenden, wobei für sämtliche für die Bildung des neuronalen Netzes NN verwendeten Signale jeweils ein eigener Slot im Frame F realisiert ist.

Ebenso ist es möglich, einen Frame F zu verwenden, der lediglich aus einem einzigen Slot besteht, wobei die ermittelten Signale über die Gewichtungsmatrix miteinander gewichtet werden.

### Modularer Aufbau

Eine weitere bevorzugte Weiterbildung der Erfindung ist in **Fig. 11** näher dargestellt. Diese zeigt schematisch einen programmierbaren neuronalen Schaltkreis, mit dem durch Programmierung in eine Vielzahl von unterschiedlichen Neuronalen Netzwerken hergestellt werden kann. Wie bereits zuvor erwähnt, ist der strukturelle Aufbau eines optoelektrischer Kopplers gleich, unabhängig davon, ob dieser als optischer Empfänger 123 oder optischer Emitter 124 betrieben wird. In der in **Fig. 8** dargestellten Ausprägung der Erfindung unterscheiden sich optischer Empfänger 123 oder optischer Emitter 124 lediglich in ihrer Ansteuerung. Aus diesem Grund kann ein modulares Prinzip zum Aufbau eines neuronalen Netzwerks auf einem gemeinsamen Träger, zB auf einem Chip, vorsehen, dass eine Steuereinheit des elektrooptischen Schaltkreis 120 die Funktionsweise der Wandler 123, 124 je nach Anwendungsfall durch unterschiedliche Ansteuerung festlegt, ohne dass zum Zeitpunkt der Fertigung des Trägers eine solche Zuordnung festgelegt werden muss. Erst bei der Festlegung des zu emulierenden neuronalen Netzwerks NN werden die optischen Wandler je nach Bedarf durch Festlegung des lokalen Laserstroms, Vorgabe einer Vorspannung am Elektroabsorptionsmodulator und/oder Messung des vom Elektroabsorptionsmodulator abgegebenen Stroms entweder als optische Empfangseinheit 123 oder optischer Emitter 124 betrieben.

Nach derselben Maßgabe lassen sich auch die einzelnen Neuronen-Schaltkreise 120, die jeweils einen Integrator 126, einen Schwellenwertbilder 127 und eine Verzögerungseinheit 128 aufweisen, als Module ausbilden, beispielsweise auf demselben Träger.

Um nun unterschiedliche neuronale Netze auf demselben Träger, quasi durch Programmierung, zu erreichen, kann eine Schaltmatrix 129 vorgesehen sein, an die sämtliche elektrische Ein- und Ausgänge der Neuronen-Schaltkreise 120 sowie die elektrischen Anschlüsse der elektrooptischen Koppler angeschlossen sind. Die Schaltmatrix 129 ist dazu in der Lage, beliebige elektrische Anschlüsse miteinander zu verkoppeln, um so die Anschlussstruktur des neuronalen Netzwerks erreichen.

Im vorliegenden Ausführungsbeispiel werden für jedes einzelne Neuron N jeweils zwei elektrooptische Koppler verwendet, von denen jeweils einer als optische Empfangseinheit und einer als optischer Transmitter verwendet werden. Für jedes Neuron wird jeweils ein Neuronen-Schaltkreis verwendet, wobei der elektrische Anschluss der Empfangseinheit 123 über die Schaltmatrix 129 zum Eingang des jeweiligen Neuronen-Schaltkreis 120 geführt ist und der Ausgang dieses Neuronen-Schaltkreises 120 über die Schaltmatrix 129 an den elektrischen Anschluss des optischen Emitters 124 geführt ist.

Grundsätzlich kann die Schaltmatrix 129 auch die Funktion der Gewichtungsmatrix wahrnehmen und Gewichtungen der einzelnen Signalwerte an den elektrischen Anschlüssen der optischen Empfangseinheit 123 vorzunehmen.

Die Verschaltung der Schaltmatrix, die Konfiguration der Neuronen-Schaltkreise 120 sowie die Konfiguration optischer Empfänger 123 bzw optischer Emitter 124 entsprechend dem vorgegebenen neuronalen Netz NN kann über eine zentrale Steuereinheit S vorgegeben werden.

### Training

Das Training des neuronalen Netzes kann mit unterschiedlichen bekannten Methoden vorgenommen werden. Der erfindungsgemäße Aufbau legt sich auf keine bestimmte Methode fest; die Gewichte werden aufgrund der gewählten Trainingsmethode extern festgelegt.

## Patentansprüche

1. Optische Anordnung (100) zur Emulation eines neuronalen Netzes,
- wobei durch die Struktur des zu emulierenden neuronalen Netzwerks (NN) eine Verschaltung von zu emulierenden Neuronen (Nₐ, ..., Nⱼ) vorgegeben ist, die ihrerseits eine Anzahl zu übertragenden Signalen (i₁, ..., iⱼ, o₁, ... o₃) vorgibt, die den Neuronen (Nₐ, ..., Nⱼ) zugeführt und/oder von den Neuronen (Nₐ, ..., Nⱼ) erzeugt sind,
- wobei jedes dieser Signale (i₁, ..., iⱼ, o₁, ... o₃) jeweils zumindest einem Kanal zugeordnet ist, der durch die Auswahl zumindest eines vorgegebenen optischen Frequenzkanals (f₁, ..., f₄) und zumindest eines zeitlich innerhalb eines Frame (F) liegenden und gegenüber diesem definierten Slots (t₁, ..., tₙ) gekennzeichnet ist,
wobei die optische Anordnung (100) umfasst:
- zumindest einen optischen Eingang (I)
- zumindest einen optischen Ausgang (O)
- einen, insbesondere passiven, optischen Hub (110), der als Sternkoppler ausgeführt ist, wobei der Eingang (I) und Ausgang (O) über einen optischen Wellenleiter (101; 102) an den Hub (110) angeschlossen sind, und
- ein elektrooptischer Schaltkreis (120), umfassend
- eine Anzahl von optischen Empfängern (123), die optisch an den Hub (110) gekoppelt sind,
- eine Anzahl von optischen Emittern (124), die optisch an den Hub (110) gekoppelt sind, und
- eine Anzahl von Neuronen-Schaltkreisen (120), die zumindest einem optischen Empfänger (123) nachgeschaltet sind und an deren Ausgang einen optischer Emitter (124) umfassen, wobei die Neuronen-Schaltkreise (120) dazu ausgebildet sind, die Funktion jeweils eines Neurons aus dem neuronalen Netzwerk zu erfüllen, und wobei die Neuronen-Schaltkreise (120) jeweils über einen Takteingang verfügen, der jeweils den Beginn eines Frames (F) und/oder Slots (t₁, ..., tₙ) indiziert,
- wobei der elektrooptische Schaltkreis (120) dazu ausgebildet ist, in jeweils periodisch wiederkehrenden Frames (F)
- den optischen Empfänger (123) oder die optischen Empfänger, die einem Neuronen-Schaltkreis (120) vorgeschaltet sind, entsprechend den den Eingangssignalen des zu emulierenden Neurons zugeordneten Kanälen jeweils während des durch den Kanal vorgegebenen Slots auf den durch den Kanal vorgegebenen Frequenzkanal (f₁, ..., f₄) einzustellen, sodass der jeweilige optische Empfänger (123) während dieses Slots über den Frequenzkanal dasjenige übermittelte Signal empfängt, das durch das zu emulierende neuronale Netzwerk vorgegeben ist,
- an die den einzelnen Neuronen-Schaltkreisen (120) vorgeschalteten optischen Empfänger (123) eine zeitlich variierende periodische Gewichtsfunktion zuzuführen, mit der das betreffende Signal entsprechend der Vorgabe des neuronalen Netzes zu gewichten ist und/oder gewichtet wird, wobei
- die Periodizität der Gewichtsfunktion der Dauer eines Frames entspricht und wobei der Wert der periodischen Gewichtsfunktion während der Slots demjenigen Gewichtswert entspricht, mit dem das mit dem Neuronen-Schaltkreis emulierte Neuron das bei ihm im betreffenden Slot einlangende Signal gewichtet,
- wobei für jeden der Neuronen-Schaltkreise (120, ..., 125) jeweils eine Ausgangsschaltung umfassend folgende Einheiten vorgesehen ist:
- ein Integrator (126) dem der elektrische Ausgang des optischen Empfängers (123) zugeführt ist und der dazu ausgebildet ist, das bei ihm einlangende gewichtete Signal während eines Frame zu integrieren und an seinem Ausgang ein diesbezügliches Integralsignal abzugeben,
- eine Schwellenwertschaltung (127), die prüft, ob das so ermittelte Integralsignal einen vorgegebenen Schwellenwert übersteigt und wenn dies der Fall ist, ein Aktivierungssignal erstellt,
- eine Verzögerungseinheit (128), bei Vorliegen eines von der Schwellenwertschaltung (127) erstellten Aktivierungssignals während eines, insbesondere des unmittelbar, nachfolgenden Frame an danachgeschalteten optischen Emitter (124) zur Abgabe eines Signals veranlasst, und zwar während eines Slots und mit einer Frequenz, der bzw die dem betreffenden Signal des neuronalen Netzwerks zugewiesen ist.

2. Vorrichtung nach Anspruch 1, **dadurch gekennzeichnet, dass**
- die elektrooptischen Empfänger (123) jeweils einen Empfängerlaser (142) und einen Elektroabsorptionsmodulator (141) aufweisen,
- sowohl das beim optischen Eingang des Empfängers (123) einfallende Laserlicht wie auch das Licht des Empfängerlasers (142) auf den Elektroabsorptionsmodulator gerichtet sind,
- am Ausgang des Elektroabsorptionsmodulators (141) ein Strom fließt, der proportional und/oder monoton steigend zur Intensität des am Eingang des Empfängers (123) einlangenden Laserlichts ist, und der dem Integrator zugeführten gewichteten Signal entspricht,
- der elektrooptische Schaltkreis (120) dazu ausgebildet ist, zur Festlegung der Gewichtung eines optischen Signals im Rahmen der elektrooptischen Umwandlung in einem Empfänger (123)
- die Frequenz des Empfängerlasers (142) innerhalb desjenigen Frequenzbands (f₁, f₂, f₃, f₄) einzustellen, das dem vom jeweiligen Empfänger während des jeweiligen Slots zu empfangenden Signal zugewiesen ist, sodass sich ein homodyner Empfang einstellt, und
- die Frequenz innerhalb des Frequenzbands (f₁, f₂, f₃, f₄) so festzulegen, dass sich eine Gewichtung, insbesondere auch eine Änderung des Vorzeichens, vorzugsweise durch Auswahl einer Frequenz am oberen Ende des Frequenzbands, des am Eingang des Empfängers (123) einlangenden Signals ergibt.

3. Vorrichtung nach Anspruch 2, **dadurch gekennzeichnet, dass** der elektrooptische Schaltkreis (120) dazu ausgebildet ist, eine zusätzliche Gewichtung mit einem positiven Gewichtungsfaktor durch Vorgabe einer Vorspannung am Eingang des Elektroabsorptionsmodulators (141) vorzunehmen.

4. Vorrichtung nach einem der vorangehenden Ansprüche, **dadurch gekennzeichnet, dass** ein Empfänger (123), insbesondere jeder Empfänger (123), zur Unterdrückung von spektralen Nachbarkanälen und Rauschen des lokalen Laserlichts folgendes umfasst:
- einen Strahlteiler (155), der das bei ihm einlangende Laserlicht in zwei Lichtanteile mit derselben Signalenergie aufteilt,
- zwei Elektroabsorptionsmodulatoren (151, 153), denen jeweils einer der Lichtanteile über jeweils einen optischen Wellenleiter (157, 158) zugeführt sind,
- einen lokalen Empfängerlaser (152),
- einen zwischen dem lokalen Empfängerlaser (152) und einem der Elektroabsorptionsmodulatoren (151, 153) angeordneten Phasenschieber (154), der die Phase des bei diesem Elektroabsorptionsmodulator (151, 153) einlangenden Laserlichts des lokalen Empfängerlasers (152) so einstellt, dass die durch den homodynen Empfang ermittelten elektrischen Stromsignale (I+, I-) an den Ausgängen beiden Elektroabsorptionsmodulatoren (151, 153) um 180° zueinander phasenverschoben sind, und
- einen Differenzbilder (156), insbesondere einen differentiellen Transimpedanzverstärker (156), dem die beiden elektrischen Stromsignale (I+, I-) zugeführt sind, und an dessen Ausgang das gewichtete Signal vorliegt.

5. Vorrichtung nach einem der vorangehenden Ansprüche, **gekennzeichnet durch**
- eine Anzahl von optoelektronischen Wandlereinheiten (123; 124), die jeweils einen lokalen Laser (142) und einen Elektroabsorptionsmodulator (141) aufweisen, wobei der elektrooptische Schaltkreis (120) dazu ausgebildet ist, diese einzeln durch Festlegung des lokalen Laserstroms, Vorgabe einer Vorspannung am Elektroabsorptionsmodulator und/oder Messung des vom Elektroabsorptionsmodulator abgegebenen Stroms je nach Vorgabe des zu emulierenden neuronalen Netzwerks als optische Empfangseinheit (123) oder optischen Emitter (124) zu betreiben,
- eine Anzahl von Neuronen-Schaltkreisen (120i) jeweils umfassend einen Integrator (126), einen Schwellenwertbilder (127) und eine Verzögerungseinheit (128), sowie jeweils einen elektrischen Eingang und einen elektrischen Ausgang,
- eine vom elektrooptischen Schaltkreis (120) gesteuerte Schaltmatrix (129), die dazu ausgebildet ist, die einzelnen optischen Empfangseinheiten (123) und optischen Emitter (124) mit den Ein- und Ausgängen der Neuronen-Schaltkreise (120i) elektrisch zu verbinden, die Funktion des zu emulierenden neuronalen Netzwerks nachzubilden.

## Claims

1. Optical array (100) for emulating a neural network,
- wherein an interconnection of neurons to be emulated (Nₐ, ..., Nⱼ) is determined by the structure of the neural network (NN) to be emulated, which in turn determines a number of signals (i₁; ..., iⱼ, o₁, ..., o₃) to be transmitted, which signals are fed to the neurons (Nₐ, ..., Nⱼ) and/or are generated by the neurons (Nₐ, ..., Nⱼ),
- wherein each of these signals (i₁; ..., iⱼ, o₁; ..., o₃) is assigned, in each case, to at least one channel, which is charcterised by the selection of at least one predetermined optical frequency channel (f₁; ..., f₄) and at least one slot (t₁; ..., tₙ), which is located temporally within a frame (F) and is defined in relation thereto,
wherein the optical array (100) comprises:
- at least one optical input (I)
- at least one optical output (O)
- an, in particular passive, optical hub (110), which is designed as a star coupler, wherein the input (I) and output (O) are connected to the hub (110) via an optical waveguide (101; 102), and
- an electro-optical circuit (120), comprising
- a number of optical receivers (123), which are optically coupled to the hub (110),
- a number of optical emitters (124), which are optically coupled to the hub (110), and
- a number of neuron circuits (120), which are connected downstream of at least one optical receiver (123) and comprise an optical emitter (124) at its output, wherein the neuron circuits (120) are designed to perform the function of a neuron, in each case, from the neural network, and wherein the neuron circuits (120) have a clock input, in each case, which indicates the beginning of a frame (F) and/or slot (t₁; ..., tₙ),
- wherein the electro-optical circuit (120) is designed, in periodically recurring frames (F), in each case,
- to adjust the optical receiver (123) or the optical receivers, which are connected upstream of a neuron circuit (120), corresponding to the channels assigned to the input signals of the neuron to be emulated, in each case during the slot determined by the channel, to the frequency channel (f₁, ..., f₄) determined by the channel, such that the particular optical receiver (123) receives the signal transmitted during this slot via the frequency channel, which is determined by the neural network to be emulated,
- to supply the optical receivers (123) connected upstream of the individual neuron circuits (120) with a periodic weighting function, which varies over time, with which the relevant signal must be and/or is weighted as specified by the neural network, wherein
- the periodicity of the weighting function corresponds to the duration of a frame and wherein the value of the periodic weighting function during the slots corresponds to the weight value, with which the neuron emulated with the neuron circuit weights the signal arriving within the relevant slot,
- wherein, for each of the neuron circuits (120, ..., 125), in each case, an output circuit comprising the following units is provided:
- an integrator (126), which is fed to the electrical output of the optical receiver (123), and which is designed to integrate the weighted signal arriving thereon during a frame and to emit a relevant integral signal at its output,
- a threshold circuit (127), which checks whether the integral signal determined in this way exceeds a predetermined threshold and, if this is the case, generates an activation signal,
- a delay unit (128), in the presence of an activation signal generated by the threshold circuit (127) during one, in particular the immediately succeeding frame to adjacent optical emitters (124), for outputting a signal during a slot and with a frequency, which is assigned to the relevant neural network signal.

2. Device according to claim 1, **characterised in that**
- the electro-optical receivers (123) each have a receiver laser (142) and an electro-absorption modulator (141),
- both the incoming laser light at the optical input of the receiver (123), as well as the light of the receiver laser (142), are focused on the electro-absorption modulator,
- a current, which is proportional and/or increasing monotonically to the intensity of the laser light arriving at the input of the receiver (123), flows at the output of the electro-absorption modulator (141) and corresponds to the weighted signal fed to the integrator,
- the electro-optical circuit (120) is designed to determine the weighting of an optical signal as part of the electro-optical conversion in a receiver (123)
- adjust the frequency of the receiver laser (142) within the frequency band (f₁; f₂, f₃, f₄), which is assigned to the signal to be received by the particular receiver during the particular slot, such that homodyne reception is established, and
- set the frequency within the frequency band (f₁; f₂, f₃, f₄) such that a weighting, in particular also a change to the sign, arises preferably by selecting a frequency at the upper end of the frequency band, of the signal arriving at the input of the receiver (123).

3. Device according to claim 2, **characterised in that** the electro-optical circuit (120) is designed to perform an additional weighting with a positive weighting factor by specifying a bias voltage at the input of the electro-absorption modulator (141).

4. Device according to any of the preceding claims, **characterised in that** a receiver (123), in particular each receiver (123), for suppressing spectral adjacent channels and noises of the local laser light, comprises the following:
- a beam splitter (155), which splits the laser light arriving thereon into two light components with the same signal energy,
- two electro-absorption modulators (151, 153), to which, in each case, one of the light components is fed via an optical waveguide (157, 158),
- a local receiver laser (152),
- a phase shifter (154) arranged between the local receiver laser (152) and one of the electro-absorption modulators (151, 153), which adjusts the phase of the laser light arriving at this electro-absorption modulator (151, 153) of the local receiver laser (152) such that the electrical current signals (I+, I-) determined by the homodyne reception at the outputs of both
electro-absorption modulators (151, 153) are phase-shifted by 180° relative to one another, and
- a differential image (156), in particular a differential transimpedance amplifier (156), to which the two electrical current signals (I+, I-) are fed, and at the output of which the weighted signal is present.

5. Device according to any of the preceding claims, **characterised in that**
- a number of opto-electronic converter units (123, 124), which each have a local laser (142) and an electro-absorption modulator (141), wherein the electro-optical circuit (120) is designed to operate these individually as an optical receiving unit (123) or an optical emitter (124) by determining the local laser current, specifying a bias voltage at the electro-absorption modulator and/or measuring the power delivered by the electro-absorption modulator depending on the specification of the neural network to be emulated,
- a number of neuron circuits (120i) each comprising an integrator (126), a threshold circuit image (127) and a delay unit (128), as well as, in each case, an electrical input and an electrical output,
- a switching matrix (129) controlled by the electro-optical circuit (120), which is designed to electrically connect the individual optical receiving units (123) and optical emitters (124) to the inputs and outputs of the neuron circuits (120i), to replicate the functioning of the neural network to be emulated.

## Revendications

1. Agencement optique (100) pour l'émulation d'un réseau neuronal,
- dans lequel une interconnexion de neurones à émuler (Nₐ, ..., Nⱼ) est prédéfinie par la structure du réseau neuronal à émuler (NN), qui prédéfinit quant à elle un certain nombre de signaux à transmettre (i₁ ;..., iⱼ, o₁, ... o₃), qui sont fournis aux neurones (Nₐ, ..., Nⱼ) et/ou sont produits par les neurones (Nₐ, ..., Nⱼ),
- dans lequel chacun de ces signaux (i₁; ..., iⱼ, o₁; ... o₃) est associé respectivement à au moins un canal, qui est **caractérisé par** la sélection d'au moins un canal de fréquence optique prédéfini (f₁; ..., f₄) et d'au moins un créneau temporel se trouvant dans une trame (F) et défini par rapport à celle-ci (t₁ ;..., tₙ),
dans lequel l'agencement optique (100) comprend :
- au moins une entrée optique (I)
- au moins une sortie optique (O)
- un concentrateur optique (110), en particulier passif, qui est réalisé comme coupleur en étoile, dans lequel l'entrée (I) et la sortie (O) sont raccordées par l'intermédiaire d'un guide d'ondes optique (101 ; 102) sur le concentrateur (110), et
- un circuit électro-optique (120), comprenant
- un certain nombre de récepteurs optiques (123), qui sont couplés de manière optique au concentrateur (110),
- un certain nombre d'émetteurs optiques (124), qui sont couplés de manière optique au concentrateur (110), et
- un certain nombre de circuits neuronaux (120), qui sont montés en aval d'au moins un récepteur optique (123) et comprennent au niveau de leur sortie un émetteur optique (124), dans lequel les circuits neuronaux (120) sont conçus pour remplir la fonction respectivement d'un neurone issu du réseau neuronal, et dans lequel les circuits neuronaux (120) disposent respectivement d'une entrée de cadence, qui indique respectivement le début d'une trame (F) et/ou d'un créneau temporel (t₁ ; ..., tₙ),
- dans lequel le circuit électro-optique (120) est conçu pour régler dans respectivement des trames (F) récurrentes périodiquement
- le récepteur optique (123) ou les récepteurs optiques, qui sont montés en amont d'un circuit neuronal (120), correspondant aux canaux associés aux signaux d'entrée du neurone à émuler respectivement pendant le créneau temporel prédéfini par le canal sur le canal de fréquences prédéfini par le canal (f₁, ..., f₄), de sorte que le récepteur optique (123) respectif reçoit pendant ce créneau temporel par l'intermédiaire du canal de fréquences le signal transmis, qui est prédéfini par le réseau neuronal à émuler,
- auquel les récepteurs optiques (123) montés en amont des circuits neuronaux individuels (120) fournissent une fonction de pondération périodique variant dans le temps, avec laquelle le signal concerné doit être pondéré et/ou est pondéré conformément à ce qui est spécifié dans le réseau neuronal, dans lequel
- la périodicité de la fonction de pondération correspond à la durée d'une trame et dans lequel la valeur de la fonction de pondération périodique correspond pendant le créneau temporel à la valeur pondérale, avec laquelle le neurone émulé avec le circuit neuronal pondère le signal qu'il reçoit dans le créneau temporel concerné,
- dans lequel pour chacun des circuits neuronaux (120, ..., 125) respectivement un circuit de sortie est prévu comprenant les unités suivantes :
- un intégrateur (126) qui est fourni à la sortie électrique du récepteur optique (123) et qui est conçu pour intégrer le signal pondéré qu'il reçoit pendant une trame et émettre à sa sortie un signal intégral correspondant,
- un circuit à seuil (127), qui vérifie si le signal intégral ainsi déterminé dépasse une valeur seuil prédéfinie et si tel est le cas, crée un signal d'activation,
- une unité de retard (128) amène, en présence d'un signal d'activation créé par le circuit à seuil (127) pendant une, en particulier la trame immédiatement suivante au niveau de l'émetteur optique (124) monté en aval à émettre un signal, notamment pendant un créneau temporel et avec une fréquence, qui est affectée respectivement au signal concerné du réseau neuronal.

2. Dispositif selon la revendication 1, **caractérisé en ce que**
- les récepteurs électro-optiques (123) présentent respectivement un laser récepteur (142) et un modulateur à électro-absorption (141),
- aussi bien la lumière laser incidente à l'entrée optique du récepteur (123) que la lumière du laser récepteur (142) sont dirigées sur le modulateur à électro-absorption,
- un courant circule à la sortie du modulateur à électro-absorption (141), qui est proportionnel et/ou augmente de manière monotone par rapport à l'intensité de la lumière laser arrivant à l'entrée du récepteur (123), et qui correspond au signal pondéré fourni à l'intégrateur,
- un circuit électro-optique (120) qui est conçu pour déterminer la pondération d'un signal optique dans le cadre de la conversion électro-optique dans un récepteur(123)
- régler la fréquence du laser récepteur (142) à l'intérieur de la bande de fréquences (f₁; f₂, f₃, f₄), qui est affectée au signal à recevoir par le récepteur respectif pendant le créneau temporel respectif, de sorte qu'une réception homodyne est établie, et
- déterminer la fréquence dans la bande de fréquences (f₁; f₂, f₃, f₄) de telle manière qu'une pondération, en particulier également un changement du signe, résulte de préférence par sélection d'une fréquence à l'extrémité supérieure de la bande de fréquences, du signal reçu à l'entrée du récepteur (123) .

3. Dispositif selon la revendication 2, **caractérisé en ce que** le circuit électro-optique (120) est conçu pour effectuer une pondération supplémentaire avec un facteur de pondération positif en prédéfinissant une précontrainte à l'entrée du modulateur à électro-absorption (141).

4. Dispositif selon l'une quelconque des revendications précédentes, **caractérisé en ce qu'**un récepteur (123), en particulier chaque récepteur (123), pour la suppression de canaux adjacents spectraux et de bruits de la lumière laser locale, comprend les éléments suivants :
- un séparateur de faisceau (155), qui divise la lumière laser qu'il reçoit en deux fractions de lumière avec la même énergie de signal,
- deux modulateurs à électro-absorption (151, 153), auxquels sont fournis respectivement l'une des fractions de lumière par l'intermédiaire respectivement d'un guide d'ondes optique (157, 158),
- un laser récepteur local (152),
- un déphaseur (154) agencé entre le laser récepteur local (152) et l'un des modulateurs à électro-absorption (151, 153), qui règle la phase de la lumière laser que reçoit ce modulateur à électro-absorption (151, 153) du laser récepteur local (152), de telle sorte que les signaux de courant électrique (I+, I-) déterminés par le récepteur homodyne au niveau des sorties des deux
modulateurs à électro-absorption (151, 153) sont déphasés mutuellement de 180°, et
- une image différentielle (156), en particulier un amplificateur à transimpédance différentiel (156), auquel sont fournis les deux signaux de courant électrique (I+, I-), et à sa sortie le signal pondéré est présent.

5. Dispositif selon l'une quelconque des revendications précédentes, **caractérisé par**
- une certain nombre d'unités de conversion opto-électroniques (123 ; 124), qui présentent respectivement un laser local (142) et un modulateur à électro-absorption (141), dans lequel le circuit électro-optique (120) est conçu pour les utiliser individuellement en déterminant le courant laser local, en prédéfinissant une précontrainte au niveau du modulateur à électro-absorption et/ou en mesurant le courant délivré par le modulateur à électro-absorption selon le paramètre prédéfini du réseau neuronal à émuler en tant qu'unité de réception optique (123) ou émetteur optique (124),
- un certain nombre de circuits neuronaux (120i) comprenant respectivement un intégrateur (126), une image à seuil (127) et une unité de retard (128), ainsi que respectivement une entrée électrique et une sortie électrique,
- une matrice de commutation (129) commandée par un circuit électro-optique (120), qui est conçue pour relier électriquement les unités de réception optiques (123) individuelles et l'émetteur optique (124) aux entrées et sorties des circuits neuronaux (120i), pour reproduire la fonction du réseau neuronal à émuler.
